# EUROPEAN PATENT SPECIFICATION

(11) **EP 4 509 736 B1**
(45) Date of publication and mention of the grant of the patent: **31.12.2025**
(21) Application number: 23830818.3
(22) Date of filing: 26.04.2023
(51) Int. Cl.: F16D 13/74, F16D 13/52, F16D 13/54, F16D 13/56

(54) **CLUTCH DEVICE AND MOTORCYCLE**
KUPPLUNGSVORRICHTUNG UND MOTORRAD
DISPOSITIF D'EMBRAYAGE ET MOTOCYCLETTE

(30) Priority: 30.06.2022 JP 2022106532
(43) Date of publication of application: 19.02.2025
(73) Proprietor: Kabushiki Kaisha F.C.C., Hamamatsu-shi, Shizuoka 431-1394 (JP)
(72) Inventor: KOBAYASHI, Yuki, Hamamatsu-shi, Shizuoka 431-1394 (JP)
(74) Representative: Grünecker Patent- und Rechtsanwälte PartG mbB
(86) International application number: PCT/JP2023/016508
(87) International publication number: WO 2024/004365

(56) References cited:
- EP-A1- 3 998 412
- WO-A1-2019/082597
- JP-A- 2022 072 810
- US-A1- 2020 318 694
- US-A1- 2021 033 154
- US-B2- 10 837 499

## Description

### TECHNICAL FIELD

The present invention relates to a clutch device and a motorcycle. More particularly, the present disclosure relates to a clutch device that arbitrarily allows or interrupts transfer of a rotation driving force of an input shaft that is rotationally driven by a prime mover such as an engine to an output shaft, and also relates to a motorcycle including the clutch device.

### BACKGROUND ART

Conventional vehicles such as motorcycles include clutch devices. A clutch device is disposed between an engine and a drive wheel and allows or interrupts transfer of a rotation driving force of the engine to the drive wheel. The clutch device generally includes a plurality of input-side rotating plates that rotate by a rotation driving force of an engine and a plurality of output-side rotating plates connected to an output shaft that transfers the rotation driving force to a drive wheel. The input-side rotating plates and the output-side rotating plates are alternately arranged in a stacking direction, and the input-side rotating plates and the output-side rotating plates are brought into pressure contact with each other and are separated from each other so that transfer of a rotation driving force is allowed or interrupted.

EP 3 998 412 A1 discloses a clutch device comprising a clutch boss with a boss portion and a surrounding pressure-receiving surface, and a pressure plate fitted into the boss portion, defining a pressure surface. Friction plates are arranged between these surfaces. Concave portions and through-holes are provided to guide lubricating oil effectively from an inner peripheral area of the boss portion outwardly to moisten friction plates, thus controlling drag torque and suppressing repetitive noise generation by maintaining continuous contact between corresponding cam surfaces during operation.

US 2021/033154 A1 discloses a clutch device designed to enhance torque transmission stability by improving contact between cam surfaces. It features a center clutch and a pressure clutch, each having complementary cam surfaces. The arrangement allows relative rotation and axial movement to increase or decrease clutch engagement force. A specific clearance relationship between sliding portions of the clutch components ensures precise axial guidance, minimizing tilting and thus promoting even contact between the interacting cam surfaces to stabilize torque transfer during clutch operation.

US 10 837 499 B2 relates to a clutch assembly for two-wheeled vehicles equipped with cam mechanisms that modulate the pressing force between clutch plates during torque variations. The described device includes a clutch center and pressure plate with respective cam surfaces arranged circumferentially to interact during relative rotation. Under normal drive conditions, an assist cam strengthens plate engagement to securely transfer torque. Conversely, under engine braking or reverse torque, a slipper cam function decreases clutch pressure, thus maintaining wheel traction stability. The design ensures consistent clutch performance and improves rider comfort, particularly under rapid acceleration or deceleration scenarios.

Furthermore, JP 69033020 B2 and WO 2018/172176 A1 disclose clutch devices each including a clutch center, and a pressure plate movable toward or away from the clutch center. The pressure plate is configured to press the input-side rotating plates and the output-side rotating plates. In this manner, the clutch device employs an assembly of the clutch center and the pressure plate.

In the clutch device of JP 6903020 B2, as portions holding the output-side rotating plates, the clutch center includes center-side fitting teeth (outer peripheral wall including splines), and the pressure plate includes pressure-side fitting teeth. On the other hand, in the clutch device of WO 2018/172176 A1, as portions holding the output-side rotating plates, the pressure plate includes pressure-side fitting teeth (outer peripheral wall including splines).

### SUMMARY OF INVENTION

### Technical Problems

In the clutch device of WO 2018/172176 A1, clutch oil that has flowed from the output shaft is distributed in the pressure plate. A portion of the clutch oil flows to the outside of the pressure plate through a gap between the clutch center and the pressure plate. In the clutch device, the input-side rotating plates and the output-side rotating plates held by the pressure-side fitting teeth are disposed outside the pressure plate. Thus, it is desired that clutch oil efficiently flows from the inside of the pressure plate to be supplied to the input-side rotating plates and the output-side rotating plates.

The object of the present invention is to provide a clutch device capable of efficiently discharging clutch oil from the inside of a pressure plate to the outside to supply the clutch oil to input-side rotating plates and output-side rotating plates, and also to provide a motorcycles comprising such a clutch device. Solution to Problem

According to the present invention, the above object is achieved by providing a clutch device with the features of independent claim 1 and a motorcycle with the features of claim 6. Further advantageous embodiments of the clutch device are set out in dependent claims 2 to 5.

### Advantages of Invention

The present invention provides a clutch device capable of efficiently discharging clutch oil from the inside of a pressure plate to the outside to supply clutch oil to input-side rotating plates and output-side rotating plates.

### BRIEF DESCRIPTION OF THE DRAWINGS

FIG. 1 is a cross-sectional view of a clutch device according to a first embodiment not encompassed by the present invention.
FIG. 2 is a perspective view of a clutch center according to the first embodiment.
FIG. 3 is a plan view of a clutch center according to the first embodiment.
FIG. 4 is a perspective view of a pressure plate according to the first embodiment.
FIG. 5 is a plan view of a pressure plate according to the first embodiment.
FIG. 6 is a perspective view of a pressure plate according to the first embodiment.
FIG. 7 is a plan view of a pressure plate according to the first embodiment.
FIG. 8 is an enlarged side view of a portion of a pressure-side cam portion according to the first embodiment.
FIG. 9 is an enlarged perspective view of a portion of a pressure plate according to the first embodiment.
FIG. 10 is a plan view illustrating a state where a clutch center according to the first embodiment and a pressure plate are combined.
FIG. 11A is a schematic view for describing effects of a center-side assist cam surface and a pressure-side assist cam surface.
FIG. 11B is a schematic view for describing effects of a center-side slipper cam surface and a pressure-side slipper cam surface.
FIG. 12 is a side view of a clutch center according to the first embodiment.
FIG. 13 is a perspective view of a clutch center according to a second embodiment not encompassed by the present invention.
FIG. 14 is a disassembled perspective view of a clutch center and a pressure plate according to a third embodiment not encompassed by the present invention.
FIG. 15 is a perspective view of the pressure plate according to the third embodiment.
FIG. 16 is a plan view of the pressure plate according to the third embodiment.
FIG. 17 is a side view of the pressure plate according to the third embodiment.
FIG. 18 is a perspective view of a pressure plate according to a fourth embodiment not encompassed by the present invention.
FIG. 19 is a perspective view of a pressure plate according to a fifth embodiment included in a clutch device according to the present invention.
FIG. 20 is a plan view of the pressure plate according to the fifth embodiment.
FIG. 21 is a side view of the pressure plate according to the fifth embodiment.

### DESCRIPTION OF EMBODIMENTS

Clutch devices according to embodiments of the present disclosure will be described hereinafter with reference to the drawings. The embodiments described herein are, of course, not intended to particularly limit the present disclosure. Elements and features having the same functions are denoted by the same reference characters, and description for the same elements and features will not be repeated or will be simplified as appropriate.

### <FIRST EMBODIMENT NOT ENCOMPASSED BY THE PRESENT INVENTION>

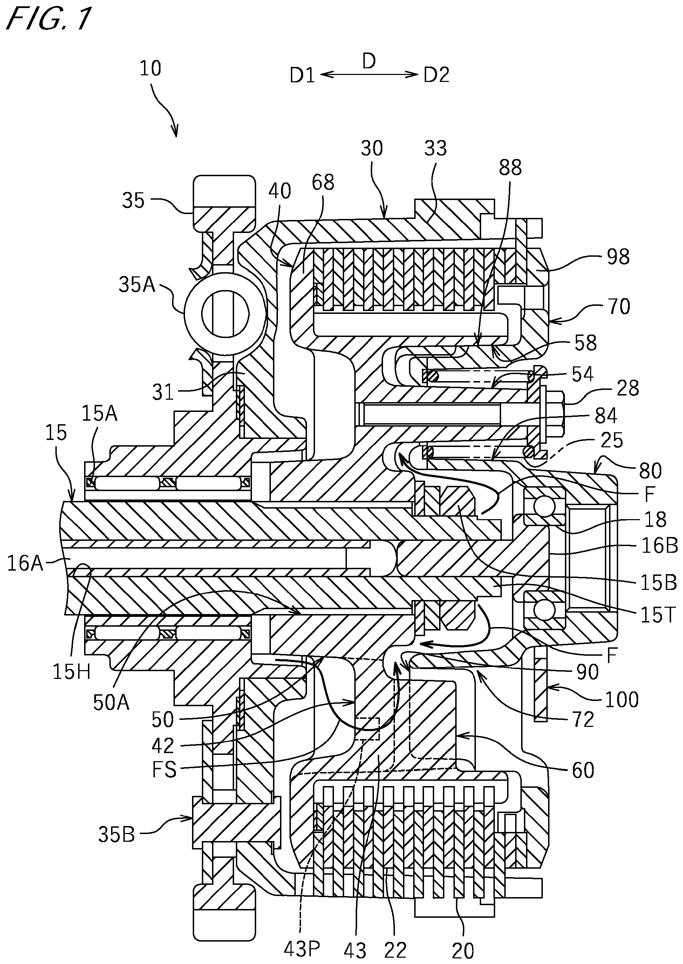

FIG. 1 is a cross-sectional view of a clutch device 10 according to a first embodiment. The clutch device 10 is provided in a vehicle such as a motorcycle, for example. The clutch device 10 allows or interrupts transfer of a rotation driving force of an input shaft (crankshaft) of an engine of the motorcycle to an output shaft 15, for example. The clutch device 10 allows or interrupts transfer of a rotation driving force of the input shaft to a drive wheel (rear wheel) through the output shaft 15. The clutch device 10 is disposed between the engine and a transmission.

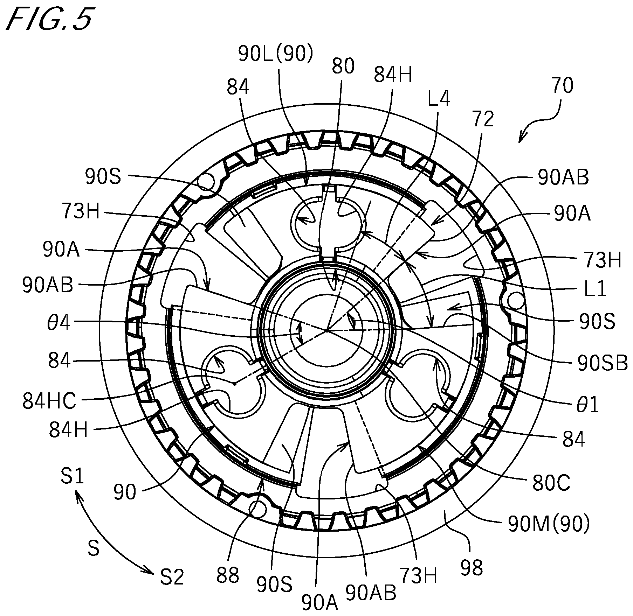

In the following description, directions in which a pressure plate 70 of the clutch device 10 moves toward and away from the clutch center 40 will be referred to as directions D, a direction in which the pressure plate 70 moves toward the clutch center 40 will be referred to as a first direction D1, and a direction in which the pressure plate 70 moves away from the clutch center 40 will be referred to as a second direction D2. Circumferential directions of the clutch center 40 and the pressure plate 70 will be referred to as circumferential directions S, one of the circumferential direction S from one pressure-side cam portion 90 to another pressure-side cam portion 90 (direction from one center-side cam portion 60 to another center-side cam portion 60) will be referred to as a first circumferential direction S1 (see FIG. 5), and one of the circumferential direction S from the other pressure-side cam portion 90 to the one pressure-side cam portion 90 (direction from the other center-side cam portions 60 to the one center-side cam portions 60) will be referred to as a second circumferential direction S2 (see FIG. 5). In this embodiment, axial directions of the output shaft 15, axial directions of a clutch housing 30, axial directions of the clutch center 40, and axial directions of the pressure plate 70 are the same as the directions D. The pressure plate 70 and the clutch center 40 rotate in the first circumferential direction S1 (i.e., direction from a center-side assist cam surface 60A to a center-side slipper cam surface 60S in one center-side cam portion 60). It should be noted that the directions described above are defined simply for convenience of description, and are not intended to limit the state of installation of the clutch device 10 and do not limit the present disclosure.

As illustrated in FIG. 1, the clutch device 10 includes the output shaft 15, input-side rotating plates 20, output-side rotating plates 22, the clutch housing 30, the clutch center 40, the pressure plate 70, and a stopper plate 100.

As illustrated in FIG. 1, the output shaft 15 is a hollow shaft. One end of the output shaft 15 rotatably supports an input gear 35 described later and the clutch housing 30 through a needle bearing 15A. The output shaft 15 fixedly supports a clutch center 40 through a nut 15B. That is, the output shaft 15 rotates together with the clutch center 40. The other end of the output shaft 15 is coupled to a transmission (not shown) of an automobile, for example.

As illustrated in FIG. 1, the output shaft 15 includes, in a hollow portion 15H thereof, a push rod 16A and a push member 16B adjacent to the push rod 16A. The hollow portion 15H serves as a channel of clutch oil. Clutch oil flows in the output shaft 15, that is, in the hollow portion 15H. The push rod 16A and the push member 16B are slidable in the hollow portion 15H of the output shaft 15. The push rod 16A has one end (left end in the drawing) coupled to a clutch operation lever (not shown) of the motorcycle, and slides in the hollow portion 15H by operation of the clutch operation lever and presses the clutch push member 16B in the second direction D2. A portion of the push member 16B projects outward of the output shaft 15 (in the second direction D2 in this embodiment) and is coupled to a release bearing 18 provided on the pressure plate 70. The push rod 16A and the push member 16B are thinner than the inner diameter of the hollow portion 15H so that flowability of clutch oil is obtained in the hollow portion 15H.

The clutch housing 30 is made of an aluminum alloy. The clutch housing 30 has a bottomed cylindrical shape. As illustrated in FIG. 1, the clutch housing 30 includes a bottom wall 31 having a substantially circular shape, and a side wall 33 extending from an edge of the bottom wall 31 in the second direction D2. The clutch housing 30 holds the plurality of input-side rotating plates 20.

As illustrated in FIG. 1, an input gear 35 is disposed on the bottom wall 31 of the clutch housing 30. The input gear 35 is fixed to the bottom wall 31 by a rivet 35B through a torque damper 35A. The input gear 35 meshes with a driving gear (not shown) that rotates by rotational driving of the input shaft of the engine. The input gear 35 is rotationally driven together with the clutch housing 30, independently of the output shaft 15.

The input-side rotating plates 20 is rotationally driven by rotational driving of the input shaft. As illustrated in FIG. 1, the input-side rotating plates 20 are held on the inner peripheral surface of the side wall 33 of the clutch housing 30. The input-side rotating plates 20 are held in the clutch housing 30 by spline fitting. The input-side rotating plates 20 are displaceable along the axial direction of the clutch housing 30. The input-side rotating plates 20 are rotatable together with the clutch housing 30.

The input-side rotating plates 20 are pushed against the output-side rotating plates 22. The input-side rotating plates 20 are ring-shaped flat plates. Each of the input-side rotating plates 20 is shaped by punching a thin plate of a steel plate cold commercial (SPCC) material into a ring shape. Friction members (not shown) of a plurality of paper sheets are attached to the front and back surfaces of the input-side rotating plates 20. A groove with a depth of several micrometers to several tens of micrometers is formed between the friction members to hold clutch oil.

As illustrated in FIG. 1, the clutch center 40 is housed in the clutch housing 30. The clutch center 40 and the clutch housing 30 are concentrically disposed. The clutch center 40 includes a cylindrical body 42 and a flange 68 extending radially outward from the outer edge of the body 42. The clutch center 40 holds the plurality of output-side rotating plates 22 arranged alternately with the input-side rotating plates 20 in the directions D. The clutch center 40 is rotationally driven together with the output shaft 15.

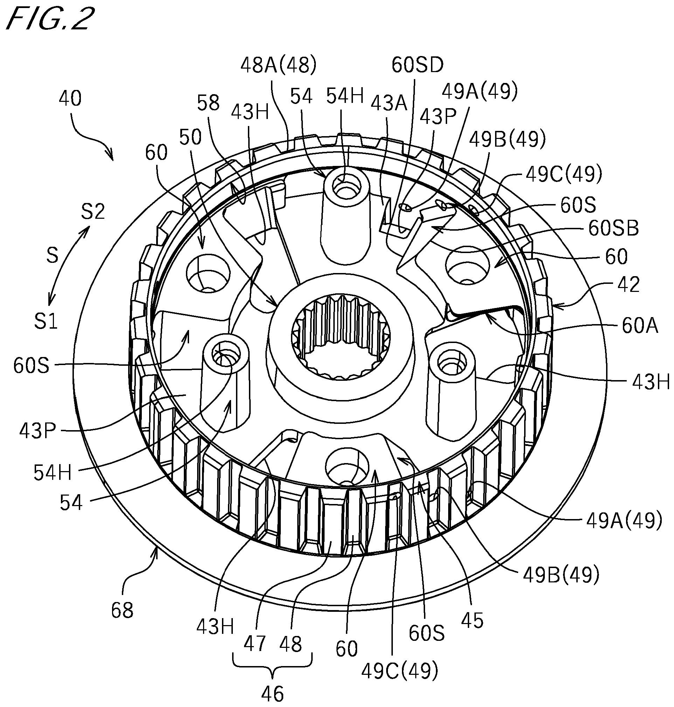

As illustrated in FIG. 2, the body 42 includes a ring-shaped base wall 43, an outer peripheral wall 45 located radially outward of the base wall 43 and extending in the second direction D2, an output shaft holding portion 50 disposed at the center of the base wall 43, a plurality of center-side cam portions 60 connected to the base wall 43 and the outer peripheral wall 45, and a center-side fitting portion 58.

The output shaft holding portion 50 has a cylindrical shape. The output shaft holding portion 50 has an insertion hole 51 in which the output shaft 15 is inserted and spline-fitted. The insertion hole 51 penetrates the base wall 43. An inner peripheral surface 50A of the output shaft holding portion 50 defining the insertion hole 51 includes a plurality of spline grooves formed along the axial direction. The output shaft 15 is coupled to the output shaft holding portion 50.

As illustrated in FIG. 2, the outer peripheral wall 45 of the clutch center 40 is disposed radially outward of the output shaft holding portion 50. The outer peripheral wall 45 is located radially outward of the center-side cam portions 60. The outer peripheral surface of the outer peripheral wall 45 includes a spline fitting portion 46. The spline fitting portion 46 includes a plurality of center-side fitting teeth 47 extending in the axial directions of the clutch center 40 along the outer peripheral surface of the outer peripheral wall 45, a plurality of spline grooves 48 each formed between adjacent ones of the center-side fitting teeth 47 and extending in the axial directions of the clutch center 40, and oil flow holes 49. The center-side fitting teeth 47 hold the output-side rotating plates 22. The plurality of center-side fitting teeth 47 arranged in the circumferential directions S. The plurality of center-side fitting teeth 47 are arranged at regular intervals in the circumferential directions S. The plurality of center-side fitting teeth 47 have the same shape. The center-side fitting teeth 47 project radially outward from the outer peripheral surface of the outer peripheral wall 45.

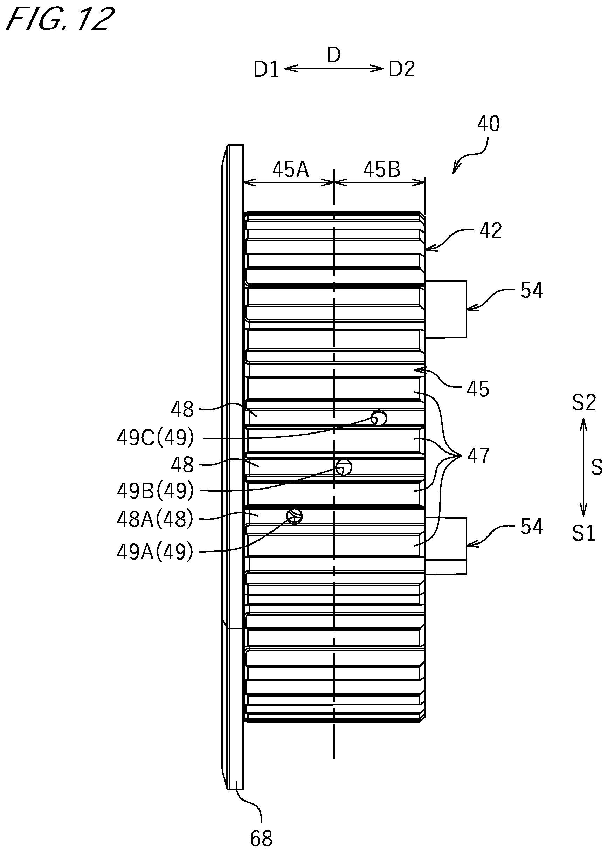

As illustrated in FIG. 2, the oil flow holes 49 penetrate the outer peripheral wall 45 along the radial directions. Each of the oil flow holes 49 is formed between adjacent ones of the center-side fitting teeth 47. That is, the oil flow holes 49 are formed in the spline grooves 48. The oil flow holes 49 are formed at the sides of the center-side cam portions 60. More specifically, the discharge holes 49 are formed at the sides of the center-side slipper cam surfaces 60S of the center-side cam portions 60. The oil flow holes 49 cause the inside and outside of the clutch center 40 to communicate with each other. The oil flow holes 49 allow clutch oil that has flowed from the output shaft 15 into the clutch center 40 to be discharged to the outside of the clutch center 40. The oil flow holes 49 allow clutch oil flowing at the inner peripheral side of the outer peripheral wall 45 to be discharged to the outside of the clutch center 40. Although the oil flow holes 49 of this embodiment have circular shapes, the shapes of the oil flow holes 49 are not particularly limited. As illustrated in FIG. 12, the oil flow holes 49 of this embodiment include a first oil flow hole 49A located at the most advanced side in the first direction D1, a second oil flow hole 49B located ahead of the first oil flow hole 49A in the second direction D2, and a third oil flow hole 49C located ahead of the second oil flow hole 49B in the second direction D2. The first oil flow hole 49A, the second oil flow hole 49B, and the third oil flow hole 49C have the same shape (i.e., the same opening area), but may have different shapes. Although the oil flow holes 49 include the first oil flow hole 49A, the second oil flow hole 49B, and the third oil flow hole 49C, the number of the oil flow holes is not limited to three. The first oil flow hole 49A, the second oil flow hole 49B, and the third oil flow hole 49C are formed in different spline grooves 48. As illustrated in FIG. 2, the first oil flow hole 49A, the second oil flow hole 49B, and the third oil flow hole 49C are formed along the center-side slipper cam surface 60S. In the circumferential directions S, the first oil flow hole 49A and the second oil flow hole 49B are formed between an end 60SB of the center-side slipper cam surface 60S in the second circumferential direction S2 and a center-side cam hole 43H described later and located ahead, in the first circumferential direction S1, of the end 60SB in the second circumferential direction S2. In the circumferential direction S, the first oil flow hole 49A is formed between an end 60SD of the center-side slipper cam surface 60S in the first circumferential direction S1 and the center-side cam hole 43H located ahead, in the first circumferential direction S1, of the end 60SD in the first circumferential direction S1. In the circumferential direction S, the first oil flow hole 49A is formed between the end 60SD of the center-side slipper cam surface 60S in the first circumferential direction S1 and a boss 54 located ahead, in the first circumferential direction S1, of the end 60SD in the first circumferential direction S1. The first oil flow hole 49A is formed in a spline groove 48A closest to the end 60SD of the center-side slipper cam surface 60S in the first circumferential direction S1 in the first circumferential direction S1. The first oil flow hole 49A is located radially outward of a through hole 43P described later. The first oil flow hole 49A is located ahead of a surface 43A of the base wall 43 in the first direction D1. The second oil flow hole 49B is located radially outward of the center-side slipper cam surface 60S. The second oil flow hole 49B is located ahead, in the second direction D2, of the end 60SD of the center-side slipper cam surface 60S in the first circumferential direction S1. The second oil flow hole 49B is located ahead, in the first direction D1, of the end 60SB of the center-side slipper cam surface 60S in the second circumferential direction S2. The third oil flow hole 49C is formed in the center-side fitting portion 58. The third oil flow hole 49C is located ahead, in the second direction D2, of the end 60SB of the center-side slipper cam surface 60S in the second circumferential direction S2. The third oil flow hole 49C is located between the center-side slipper cam surface 60S and the center-side assist cam surface 60A in the circumferential directions S.

As illustrated in FIG. 12, when the outer peripheral wall 45 is evenly divided, with respect to in the axial directions (i.e., directions D) of the output shaft 15, into two portions of a first portion 45A located on the side of the first direction D1 and a second portion 45B located on the side of the second direction D2, the total opening area of the oil flow holes 49 (the second oil flow hole 49B and the third oil flow hole 49C in this embodiment) located in the second portion 45B is larger than the total opening area of the oil flow holes 49 (the first oil flow hole 49A in this embodiment) located in the first portion 45A. In this embodiment, the plurality of oil flow holes 49 have the same shape, the number of the oil flow holes 49 located in the second portion 45B is two, and the number of the oil flow holes 49 located in the first portion 45A is one. That is, the number of the oil flow holes 49 located in the second portion 45B is larger than the number of the oil flow holes 49 located in the first portion 45A. Even in a case where the number of the oil flow holes 49 located in the second portion 45B is smaller than the number of the oil flow holes 49 located in the first portion 45A, since the oil flow holes 49 located in the second portion 45B have the different shape from that of the oil flow holes 49 located in the first portion 45A, the total opening area of the oil flow holes 49 located in the second portion 45B can be larger than the total opening area of the oil flow holes 49 located in the first portion 45A.

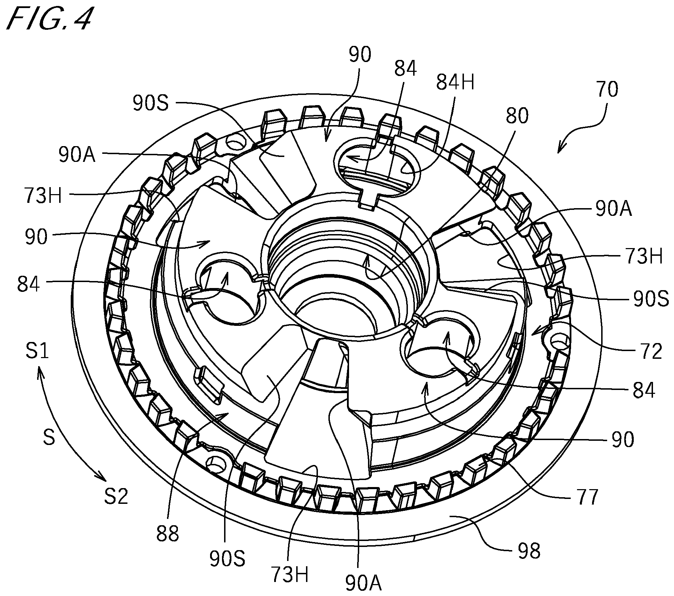

The output-side rotating plates 22 are held by the spline fitting portion 46 of the clutch center 40 and the pressure plate 70. A portion of the output-side rotating plates 22 is held by the center-side fitting teeth 47 of the clutch center 40 and the spline grooves 48 by spline fitting. Another portion of the output-side rotating plates 22 is held by a pressure-side fitting teeth 77 (see FIG. 4) described later of the pressure plate 70. The output-side rotating plates 22 are displaceable along the axial directions of the clutch center 40. The output-side rotating plates 22 are rotatable together with the clutch center 40.

The output-side rotating plates 22 are pushed against the input-side rotating plates 20. The output-side rotating plates 22 are ring-shaped flat plates. Each of the output-side rotating plates 22 is shaped by punching a thin plate of an SPCC material into a ring shape. The front and back surfaces of the output-side rotating plates 22 have grooves with depths of several micrometers to several tens of micrometers to hold clutch oil. The front and back surfaces of the output-side rotating plates 22 are subjected to a surface hardening treatment to enhance abrasion resistance. The friction members provided on the input-side rotating plates 20 may be provided on the output-side rotating plates 22 instead of the input-side rotating plates 20, or may be provided on both the input-side rotating plates 20 and the output-side rotating plates 22.

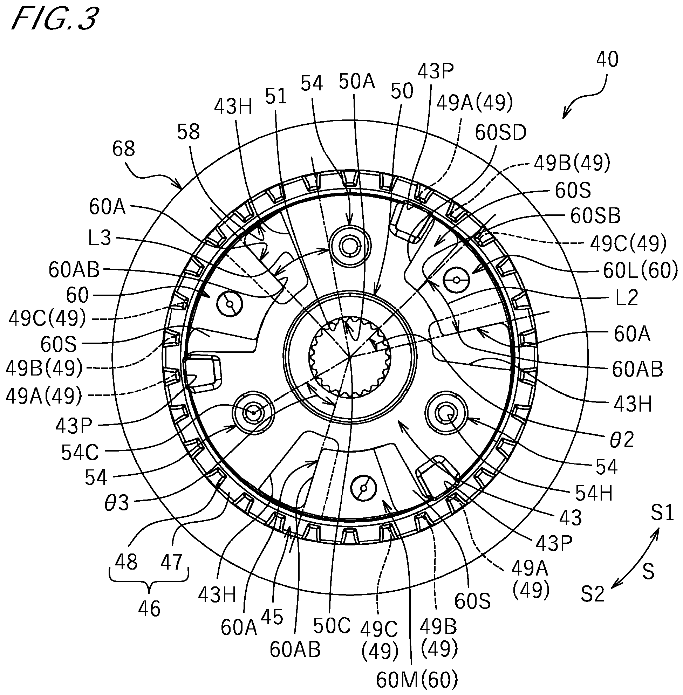

Each of the center-side cam portions 60 is formed in a trapezoidal shape including a cam surface of a slope defining an assist & slipper (registered trademark) mechanism that generates an assist torque as a force of increasing a pressing force (contact pressure force) between the input-side rotating plates 20 and the output-side rotating plates 22 or a slipper torque as a force of separating the input-side rotating plates 20 and the output-side rotating plates 22 from each other early and shifting these plates into a half-clutch state. The center-side cam portions 60 project from the base wall 43 in the second direction D2. As illustrated in FIG. 3, the center-side cam portions 60 are arranged at regular intervals in the circumferential directions S of the clutch center 40. In this embodiment, the clutch center 40 includes three center-side cam portions 60, but the number of the center-side cam portions 60 is not limited to three.

As illustrated in FIG. 3, the center-side cam portions 60 are located radially outward of the output shaft holding portion 50. Each of the center-side cam portions 60 includes the center-side assist cam surface 60A and the center-side slipper cam surface 60S. The center-side assist cam surface 60A faces in the first direction D1. The center-side slipper cam surface 60S faces in the second direction D2. The center-side assist cam surface 60A is configured to generate a force in a direction in which the pressure plate 70 approaches the clutch center 40 in order to increase a pressing force (contact pressure force) between the input-side rotating plates 20 and the output-side rotating plates 22 in relative rotation to the pressure plate 70. In this embodiment, when this force is generated, the position of the pressure plate 70 to the clutch center 40 does not change, and the pressure plate 70 does not need to approach the clutch center 40 physically. The pressure plate 70 may be physically displaced with respect to the clutch center 40. The center-side slipper cam surface 60S is configured to separate the pressure plate 70 from the clutch center 40 in order to reduce the pressing force (contact pressure force) between the input-side rotating plates 20 and the output-side rotating plates 22 in relative rotation to the pressure plate 70. In the center-side cam portions 60 adjacent to each other in the circumferential directions S, the center-side assist cam surface 60A of one center-side cam portion 60L and the center-side slipper cam surface 60S of the other center-side cam portion 60M are opposed to each other in the circumferential directions S. The center-side slipper cam surface 60S is an example of a center-side cam surface.

As illustrated in FIG. 2, the clutch center 40 includes the plurality of (for example, three in this embodiment) bosses 54. The bosses 54 support the pressure plate 70. The plurality of bosses 54 are arranged at regular intervals in the circumferential directions S. Each of the bosses 54 has a cylindrical shape. The bosses 54 are located radially outward of the output shaft holding portion 50. The bosses 54 extend toward the pressure plate 70 (i.e., in the second direction D2). The bosses 54 are disposed on the base wall 43. The bosses 54 have screw holes 54H in which bolts 28 (see FIG. 1) are inserted. The screw holes 54H extend in the axial directions of the clutch center 40.

As illustrated in FIG. 2, the center-side fitting portion 58 is located radially outward of the output shaft holding portion 50. The center-side fitting portion 58 is located radially outward of the center-side cam portions 60. The center-side fitting portion 58 is disposed ahead of the center-side cam portions 60 in the second direction D2. The center-side fitting portion 58 is formed on the inner peripheral surface of the outer peripheral wall 45. The center-side fitting portion 58 is slidably fitted onto a pressure-side fitting portion 88 (see FIG. 4) described later. The inner diameter of the center-side fitting portion 58 has a fitting tolerance allowing distribution of clutch oil flowing out of a distal end 15T of the output shaft 15 to the pressure-side fitting portion 88. That is, a gap is formed between the center-side fitting portion 58 and the pressure-side fitting portion 88 described later. In this embodiment, for example, the center-side fitting portion 58 has an inner diameter larger than the outer diameter of the pressure-side fitting portion 88 by 0.1 mm. This dimensional tolerance between the inner diameter of the center-side fitting portion 58 and the outer diameter of the pressure-side fitting portion 88 is appropriately set in accordance with the amount of clutch oil intended to be distributed, and is, for example, 0.1 mm or more and 0.5 mm or less.

As illustrated in FIGS. 2 and 3, the clutch center 40 includes the center-side cam holes 43H penetrating a portion of the base wall 43. The center-side cam holes 43H penetrate the base wall 43 in the directions D. Each of the center-side cam holes 43H is formed between adjacent ones of the center-side cam portions 60. The center-side cam holes 43H extend from portions on the side of the output shaft holding portion 50 to the outer peripheral wall 45. Each center-side cam hole 43H is formed between the center-side assist cam surface 60A of the center-side cam portion 60 and the boss 54. When seen in the axial direction of the clutch center 40, the center-side assist cam surface 60A overlaps with a portion of the center-side cam hole 43H. The center-side cam hole 43H is an example of a first through hole.

As illustrated in FIGS. 2 and 3, the clutch center 40 includes the through hole 43P penetrating a portion of the base wall 43. The through hole 43P penetrates the base wall 43 in the directions D. The through hole 43P is formed between the center-side cam portion 60 and the center-side cam hole 43H. The through hole 43P is located ahead, in the first circumferential direction S1, of the end 60SD of the center-side slipper cam surface 60S in the first circumferential direction S1. The through hole 43P is located ahead of the boss 54 in the second circumferential direction S2. The through hole 43P is located radially outward of the boss 54. The through hole 43P is adjacent to the center-side slipper cam surface 60S. The through hole 43P is smaller than the center-side cam hole 43H. The through hole 43P causes the inside and outside of the clutch center 40 to communicate with each other. The through hole 43P is configured to guide clutch oil flowing outside the clutch center 40 to the inside of the clutch center 40. More specifically, as indicated by arrow FS in FIG. 1, clutch oil that has flowed out from the output shaft 15 toward the clutch center 40 flows into the clutch center 40 through the through hole 43P. The through hole 43P communicates with the first oil flow hole 49A. The through hole 43P is an example of a second through hole.

As illustrated in FIG. 1, the pressure plate 70 is movable toward or away from the clutch center 40 and rotatable relative to the clutch center 40. The pressure plate 70 is configured to press the input-side rotating plates 20 and the output-side rotating plates 22. The pressure plate 70 is disposed coaxially with the clutch center 40 and the clutch housing 30. The pressure plate 70 includes a body 72, and a flange 98 connected to the outer edge of the body 72 on the side of the second direction D2 and extending radially outward. The body 72 projects ahead of the flange 98 in the first direction D1. The flange 98 is located radially outward of a cylindrical portion 80 (see FIG. 4) described later. The pressure plate 70 holds the plurality of output-side rotating plates 22 arranged alternately with the input-side rotating plates 20. The flange 98 is configured to press the input-side rotating plates 20 and the output-side rotating plates 22.

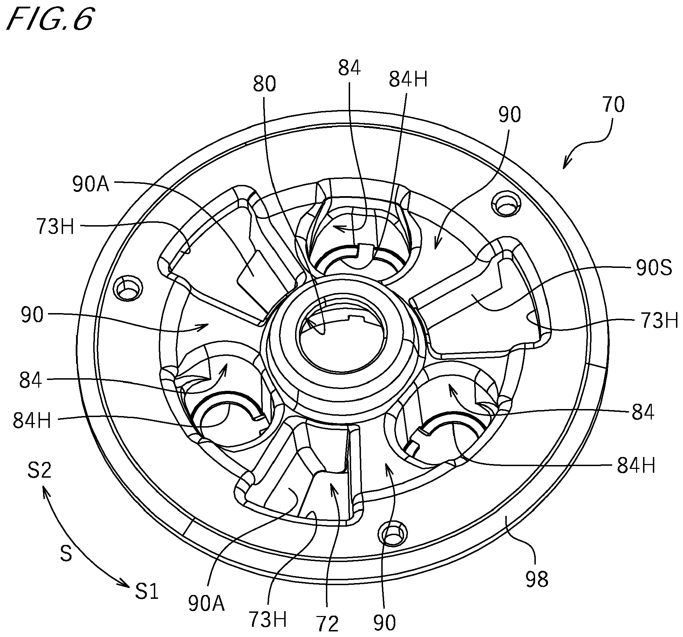

As illustrated in FIG. 4, the body 72 includes the cylindrical portion 80, the plurality of pressure-side cam portions 90, the pressure-side fitting portion 88, and a spring housing portion 84 (see also FIG. 6).

The cylindrical portion 80 has a cylindrical shape. The cylindrical portion 80 is integrally formed with the pressure-side cam portions 90. The cylindrical portion 80 houses the distal end 15T of the output shaft 15 (see FIG. 1). The cylindrical portion 80 houses the release bearing 18 (see FIG. 1). The cylindrical portion 80 receives a pressing force from the push member 16B. The cylindrical portion 80 receives clutch oil that has flowed out from the distal end 15T of the output shaft 15.

Each of the pressure-side cam portions 90 is formed in a trapezoidal shape having a cam surface of a slope constituting an assist & slipper (registered trademark) mechanism that slides on the center-side cam portions 60 and generates an assist torque or a slipper torque. The pressure-side cam portions 90 project from the flange 98 in the first direction D1. As illustrated in FIG. 5, the pressure-side cam portions 90 are arranged at regular intervals in the circumferential directions S of the pressure plate 70. In this embodiment, the pressure plate 70 includes three pressure-side cam portions 90, but the number of the pressure-side cam portions 90 is not limited to three.

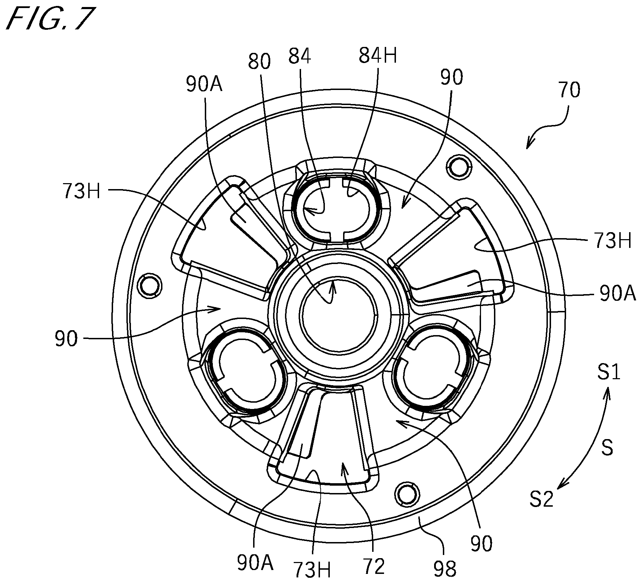

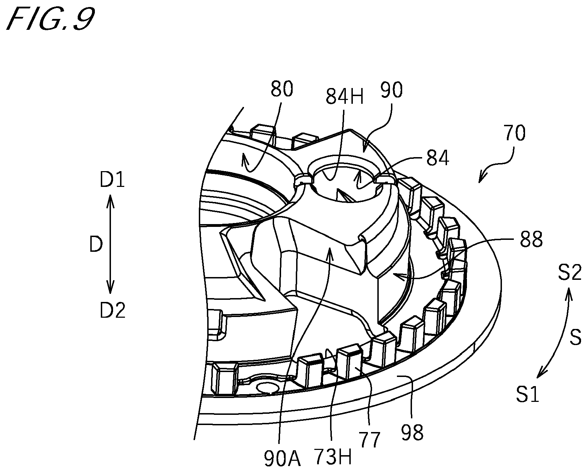

As illustrated in FIG. 5, the pressure-side cam portion 90 is located radially outward of the cylindrical portion 80. Each of the pressure-side cam portions 90 includes a pressure-side assist cam surface 90A (see also FIGS. 7 and 9) and a pressure-side slipper cam surface 90S. The pressure-side slipper cam surfaces 90S face in the first direction D1. The pressure-side assist cam surface 90A can be brought into contact with the center-side assist cam surface 60A. The pressure-side assist cam surface 90A is configured to generate a force in a direction in which the pressure plate 70 approaches the clutch center 40 in order to increase a pressing force (contact pressure force) between the input-side rotating plates 20 and the output-side rotating plates 22 in relative rotation to the clutch center 40. The pressure-side slipper cam surface 90S can be brought into contact with the center-side slipper cam surface 60S. The pressure-side slipper cam surface 90S is configured to separate the pressure plate 70 from the clutch center 40 in order to reduce a pressing force (contact pressure force) between the input-side rotating plates 20 and the output-side rotating plates 22 in relative rotation to the clutch center 40. In the pressure-side cam portions 90 adjacent to each other in the circumferential directions S, the pressure-side assist cam surface 90A of one pressure-side cam portion 90L and the pressure-side slipper cam surface 90S of the other pressure-side cam portion 90M are opposed to each other in the circumferential directions S. The pressure-side slipper cam surfaces 90S are an example of a pressure-side cam surface.

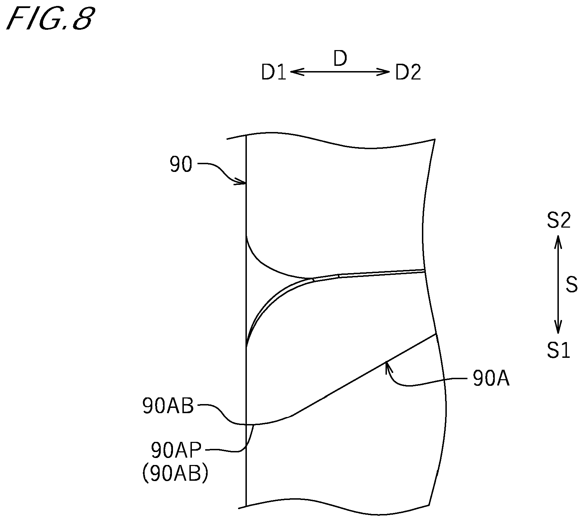

As illustrated in FIG. 8, an end of the pressure-side assist cam surface 90A of each pressure-side cam portion 90 in the circumferential directions S includes a chamfered portion 90AP that is linearly chamfered. A corner of the chamfered portion 90AP (corner on the side of the first direction D1 and the first circumferential direction S1) includes a right angle. More specifically, the chamfered portion 90AP is formed in an end 90AB of the pressure-side assist cam surface 90A in the first circumferential direction S1.

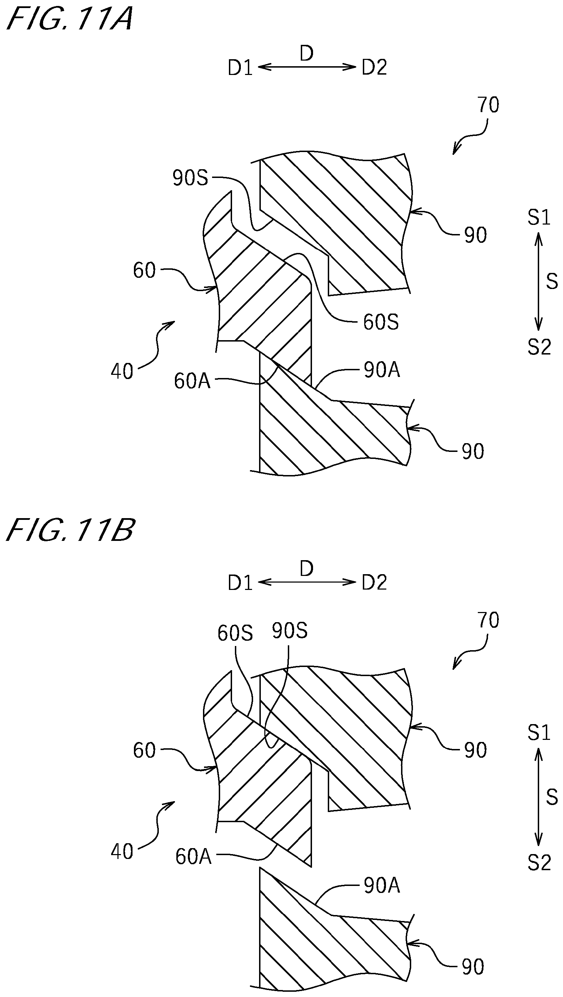

Advantages of the center-side cam portions 60 and the pressure-side cam portions 90 will now be described. When the rotation speed of the engine increases so that a rotation driving force input to the input gear 35 and the clutch housing 30 is thereby allowed to be transferred to the output shaft 15 through the clutch center 40, a rotation force in the first circumferential direction S1 is applied to the pressure plate 70, as illustrated in FIG. 11A. Thus, with the effects of the center-side assist cam surface 60A and the pressure-side assist cam surface 90A, a force in first direction D1 is generated in the pressure plate 70. Accordingly, a contact pressure force between the input-side rotating plates 20 and the output-side rotating plates 22 increases.

On the other hand, when the rotation speed of the output shaft 15 exceeds the rotation speed of the input gear 35 and the clutch housing 30 and a back torque is generated, a rotation force in the first circumferential direction S1 is applied to the clutch center 40, as illustrated in FIG. 11B. Thus, with the effects of the center-side slipper cam surface 60S and the pressure-side slipper cam surface 90S, the pressure plate 70 moves in the second direction D2 and releases a contact pressure force between the input-side rotating plates 20 and the output-side rotating plates 22. In this manner, it is possible to avoid problems in the engine and the transmission caused by the back torque.

As illustrated in FIG. 4, the pressure-side fitting portion 88 is located radially outside of the pressure-side cam portions 90. The pressure-side fitting portion 88 is located ahead of the pressure-side cam portions 90 in the second direction D2. The pressure-side fitting portion 88 is configured to slidably fit in the center-side fitting portion 58 (see FIG. 2).

As illustrated in FIGS. 4 and 5, the pressure plate 70 includes pressure-side cam holes 73H penetrating the body 72 and a portion of the flange 98. The pressure-side cam holes 73H are located radially outward of the cylindrical portion 80. The pressure-side cam holes 73H extend from portions on the side of the cylindrical portion 80 to the radially outside of the pressure-side fitting portion 88. Each of the pressure-side cam holes 73H is formed between the pressure-side assist cam surface 90A and the pressure-side slipper cam surface 90S of adjacent ones of the pressure-side cam portions 90. As illustrated in FIGS. 5 and 7, when seen in the axial direction of the pressure plate 70, the pressure-side assist cam surface 90A overlaps with portions of the pressure-side cam holes 73H.

As illustrated in FIG. 4, the pressure plate 70 includes the plurality of pressure-side fitting teeth 77 arranged on the flange 98. The pressure-side fitting teeth 77 hold the output-side rotating plates 22. The pressure-side fitting teeth 77 project from the flange 98 in the first direction D1. The pressure-side fitting teeth 77 are located radially outward of the cylindrical portion 80. The pressure-side fitting teeth 77 are located radially outward of the pressure-side cam portions 90. The pressure-side fitting teeth 77 are located radially outward of the pressure-side fitting portion 88. The plurality of pressure-side fitting teeth 77 are arranged in the circumferential directions S. The plurality of pressure-side fitting teeth 77 are arranged at regular intervals in the circumferential directions S. In this embodiment, since a portion of the pressure-side fitting teeth 77 has been removed, the interval of this portion is enlarged, but the other adjacent pressure-side fitting teeth 77 are arranged at regular intervals.

As illustrated in FIGS. 6 and 7, the spring housing portions 84 are formed in the pressure-side cam portions 90. The spring housing portions 84 are recessed from the second direction D2 to the first direction D1. Each of the spring housing portions 84 has an oval shape. The spring housing portions 84 house pressure springs 25 (see FIG. 1). The spring housing portions 84 include the insertion holes 84H which penetrate the spring housing portions 84 and in which the bosses 54 (see FIG. 2) are inserted. That is, the insertion holes 84H penetrate the pressure-side cam portions 90. Each of the insertion holes 84H has an oval shape.

As illustrated in FIG. 1, the pressure springs 25 are housed in the spring housing portions 84. The pressure springs 25 are held by the bosses 54 inserted in the insertion holes 84H of the spring housing portions 84. The pressure springs 25 bias the pressure plate 70 toward the clutch center 40 (i.e., in the first direction D1). The pressure springs 25 are, for example, coil springs obtained by helically winding spring steel.

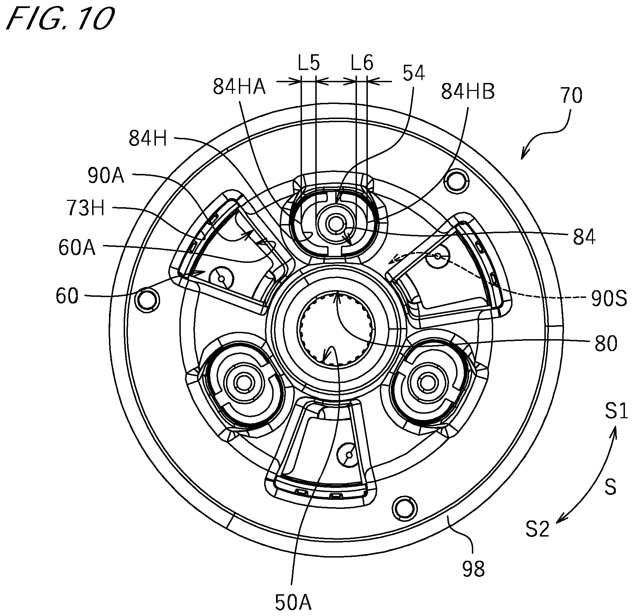

FIG. 10 is a plan view illustrating a state where the clutch center 40 and the pressure plate 70 are combined. In the state illustrated in FIG. 10, the pressure-side assist cam surface 90A and the center-side assist cam surface 60A do not contact each other, and the pressure-side slipper cam surface 90S and the center-side slipper cam surface 60S do not contact each other. At this time, the pressure plate 70 is closest to the clutch center 40. This state will be referred to as a normal state of the clutch device 10. As illustrated in FIG. 10, a distance L5 in the circumferential directions S between the boss 54 and an end 84HA of the insertion holes 84H toward the pressure-side assist cam surface 90A (i.e., ahead in the first circumferential direction S1) in the normal state is smaller than a distance L6 in the circumferential direction S between the boss 54 and an end 84HB of the insertion holes 84H toward the pressure-side slipper cam surface 90S (i.e., ahead in the second circumferential direction S2) in the normal state.

As illustrated in FIG. 1, the stopper plate 100 can contact the pressure plate 70. The stopper plate 100 reduces or prevents separation of the pressure plate 70 from the clutch center 40 by a predetermined distance or more in the second direction D2. The stopper plate 100 is fixed to the bosses 54 of the clutch center 40 with the bolts 28. The pressure plate 70 is fixed by fastening the bolts 28 to the bosses 54 through the stopper plate 100 with the bosses 54 and the pressure springs 25 of the clutch center 40 disposed in the spring housing portions 84. The stopper plate 100 is substantially triangular in plan view.

When the pressure plate 70 is brought into contact with the stopper plate 100, the pressure-side slipper cam surface 90S and the center-side slipper cam surface 60S are in contact with each other in an area of 50% or more and 90% or less of the area of the pressure-side slipper cam surface 90S and 50% or more and 90% or less of the area of the center-side slipper cam surface 60S. When the pressure plate 70 is brought into contact with the stopper plate 100, the pressure springs 25 are separated from the side walls of the spring housing portions 84. That is, the pressure springs 25 are not sandwiched between the bosses 54 and the spring housing portions 84, and application of excessive stress to the bosses 54 is suppressed.

Here, a length L1 in the circumferential directions S (see FIG. 5) from the end 90AB of the pressure-side assist cam surface 90A in the first circumferential direction S1 of one pressure-side cam portion 90L located on the side of the first circumferential direction S1 in the pressure-side cam portions 90 adjacent to each other in the circumferential directions S to an end 90SB of the pressure-side slipper cam surface 90S in the first circumferential direction S1 of the other pressure-side cam portion 90M located on the side of the second circumferential direction S2 is larger than a length L2 in the circumferential directions (see FIG. 3) from an end 60AB of the center-side assist cam surface 60A in the second circumferential direction S2 to the end 60SB of the center-side slipper cam surface 60S in the second circumferential direction S2 in one center-side cam portion 60.

When seen in the axial directions of the output shaft 15, an angle θ1 (see FIG. 5) formed by a center 80C of the cylindrical portion 80, the end 90AB of the pressure-side assist cam surface 90A in the first circumferential direction S1 located on the side of the first circumferential direction S1 of one pressure-side cam portion 90L in the pressure-side cam portions 90 adjacent to each other in the circumferential directions S, and the end 90SB of the pressure-side slipper cam surface 90S in the first circumferential direction S1 located on the side of the second circumferential direction S2 of the other pressure-side cam portion 90M is larger than an angle θ2 (see FIG. 3) formed by a center 50C of the output shaft holding portion 50, the end 60AB of the center-side assist cam surface 60A in the second circumferential direction S2, and the end 60SB of the center-side slipper cam surface 60S in the second circumferential direction S2 in one center-side cam portion 60.

A length L3 in the circumferential directions S (see FIG. 3) from the end 60AB of the center-side assist cam surface 60A in the second circumferential direction S2 to the boss 54 is larger than a length L4 in the circumferential directions S (see FIG. 5) from the end 90AB of the pressure-side assist cam surface 90A in the first circumferential direction S1 to the insertion hole 84H.

When seen in the axial directions of the output shaft 15, an angle θ3 (see FIG. 3) formed by the center 50C of the output shaft holding portion 50, the end 60AB in the second circumferential direction S2 of the center-side assist cam surface 60A of the center-side cam portion 60, and a center 54C of the boss 54 is larger than an angle θ4 (see FIG. 5) formed by the center 80C of the cylindrical portion 80, the end 90AB of the pressure-side assist cam surface 90A in the first circumferential direction S1, and a center 84HC of the insertion hole 84H.

The clutch device 10 is filled with a predetermined amount of clutch oil. Clutch oil is distributed in the clutch center 40 and the pressure plate 70 through the hollow portion 15H of the output shaft 15, and then is supplied to the input-side rotating plates 20 and the output-side rotating plates 22 through the gap between the center-side fitting portion 58 and the pressure-side fitting portion 88 and the oil flow holes 49. Clutch oil is also distributed from the outside of the clutch center 40 through the hollow portion 15H of the output shaft 15 into the clutch center 40 through the through hole 43P. Since the clutch center 40 rotates in the first circumferential direction S1, clutch oil in the clutch center 40 tends to be collected by a centrifugal force to a portion before the center-side slipper cam surfaces 60S of the center-side cam portions 60. Clutch oil reduces or prevents absorption of heat and abrasion of the friction members. The clutch device 10 according to this embodiment is a so-called multiplate wet friction clutch device.

Operation of the clutch device 10 according to this embodiment will now be described. As described above, the clutch device 10 is disposed between the engine and the transmission of the motorcycle, and allows or interrupts transfer of a rotation driving force of the engine to the transmission by driver's operation of a clutch operation lever.

In the clutch device 10, in a case where the driver of the motorcycle does not operate the clutch operation lever, a clutch release mechanism (not shown) does not press the push rod 16A, and thus, the pressure plate 70 presses the input-side rotating plates 20 with a biasing force (elastic force) of the pressure springs 25. Accordingly, the clutch center 40 enters a clutch-ON state in which the input-side rotating plates 20 and the output-side rotating plates 22 are pushed against each other to be friction coupled, and is rotationally driven. That is, a rotation driving force of the engine is transferred to the clutch center 40, and the output shaft 15 is rotationally driven.

In the clutch-ON state, clutch oil distributed in the hollow portion H of the output shaft 15 and having flowed out from the distal end 15T of the output shaft 15 is dropped or spattered in the cylindrical portion 80 and attached to the cylindrical portion 80 (see arrow F in FIG. 1). The clutch oil attached to the inside of the cylindrical portion 80 is guided into the clutch center 40. Accordingly, clutch oil flows out of the clutch center 40 through the oil flow holes 49. Clutch oil also flows out of the clutch center 40 through the gap between the center-side fitting portion 58 and the pressure-side fitting portion 88. Then, clutch oil that has flowed out of the clutch center 40 is supplied to the input-side rotating plates 20 and the output-side rotating plates 22.

On the other hand, in the clutch device 10, when the driver of the motorcycle operates the clutch operation lever in the clutch-ON state, the clutch release mechanism (not shown) presses the push rod 16A, and thus, the pressure plate 70 is displaced in a direction away from the clutch center 40 (second direction D2) against a biasing force of the pressure springs 25. Accordingly, the clutch center 40 enters a clutch-OFF state in which friction coupling between the input-side rotating plates 20 and the output-side rotating plates 22 is canceled, and thus, rotational driving attenuates or stops. That is, a rotation driving force of the engine is interrupted to the clutch center 40.

In the clutch-OFF state, clutch oil distributed in the hollow portion H of the output shaft 15 and having flowed out of the distal end 15T of the output shaft 15 is guided into the clutch center 40 in the same manner as in the clutch-ON state. At this time, since the pressure plate 70 is separated from the clutch center 40, the amount of fitting between the pressure plate 70 and each of the center-side fitting portion 58 and the pressure-side fitting portion 88 decreases. As a result, clutch oil in the cylindrical portion 80 actively flows out of the clutch center 40, and is distributed to portions in the clutch device 10. In particular, clutch oil can be actively guided to gaps between the input-side rotating plates 20 and the output-side rotating plates 22 separated from each other.

Then, when the driver cancels the clutch operation lever in the clutch-OFF state, pressing of the pressure plate 70 by the clutch release mechanism (not shown) through the push member 16B is canceled, and thus, the pressure plate 70 is displaced with a biasing force of the pressure springs 25 to a direction (first direction D1) of approaching the clutch center 40.

As described above, in the clutch device 10 according to this embodiment, the clutch center 40 rotates in the first circumferential direction S1 that is a direction from the center-side assist cam surface 60A to the center-side slipper cam surface 60S of one center-side cam portion 60. Thus, clutch oil in the clutch center 40 moves from the center-side cam hole 43H toward the center-side slipper cam surface 60S along the outer peripheral wall 45 by a centrifugal force. In the circumferential directions S, each of the oil flow holes 49 is formed between the end 60SB of the center-side slipper cam surface 60S in the second circumferential direction S2 and the center-side cam hole 43H located ahead, in the first circumferential direction S1, of the end 60SB in the second circumferential direction S2. Thus, clutch oil in the clutch center 40 can be efficiently discharged to the outside of the clutch center 40 through the oil flow holes 49 and supplied to the input-side rotating plates 20 and the output-side rotating plates 22.

In the clutch device 10 according to this embodiment, in the circumferential directions S, the first oil flow hole 49A is formed between the end 60SD of the center-side slipper cam surface 60S in the first circumferential direction S1 and the center-side cam hole 43H located ahead, in the first circumferential direction S1, of the end 60SD in the first circumferential direction S1. In this configuration, clutch oil in the clutch center 40 can be more efficiently discharged to the outside of the clutch center 40 through the first oil flow hole 49A.

In the clutch device 10 according to this embodiment, the clutch center 40 includes the bosses 54 located radially outward of the output shaft holding portion 50 and extending toward the pressure plate 70, and the first oil flow hole 49A is formed between the end 60SD of the center-side slipper cam surface 60S in the first circumferential direction S1 and the boss 54 located ahead, in the first circumferential direction S1, of the end 60SD in the first circumferential direction S1 in the circumferential directions S. In this configuration, clutch oil in the clutch center 40 can be even more efficiently discharged to the outside of the clutch center 49A through the first oil flow hole 49A.

In the clutch device 10 according to this embodiment, the clutch center 40 includes the through hole 43P located ahead, in the first circumferential direction S1, of the end 60SD of the center-side slipper cam surface 60S in the first circumferential direction S1, and the through hole 43P is configured to guide clutch oil flowing outside the clutch center 40 to the inside of the clutch center 40. In this configuration, a large amount of clutch oil flows near the end 60SD of the center-side slipper cam surface 60S in the first circumferential direction S1, and thus, the first oil flow hole 49A formed in this portion enables clutch oil in the clutch center 40 to be more efficiently discharged to the outside of the clutch center 40.

In the clutch device 10 according to this embodiment, the clutch center 40 includes the plurality of oil flow holes 49, and when the outer peripheral wall 45 is evenly divided, with respect to the axial directions (i.e., directions D) of the output shaft 15, into two portions of the first portion 45A located on the side of the first direction D1 and the second portion 45B located on the side of the second direction D2, the total opening area of the oil flow holes 49 located in the second portion 45B is larger than the total opening area of the oil flow holes 49 located in the first portion 45A. In this configuration, clutch oil in the clutch center 40 can be more efficiently discharged toward the pressure plate 70.

In the clutch device 10 according to this embodiment, in a case where the plurality of oil flow holes 49 have the same shape, the number of the oil flow holes 49 located in the second portion 45B is larger than the number of the oil flow holes 49 located in the first portion 45A. In this configuration, clutch oil in the clutch center 40 can be more efficiently discharged toward the pressure plate 70.

In the clutch device 10 according to this embodiment, the clutch center 40 includes the plurality of oil flow holes 49 that are formed along the center-side slipper cam surface 60S. In this configuration, clutch oil moving along the center-side slipper cam surface 60S can be efficiently discharged to the outside of the clutch center 40.

In the clutch device 10 according to this embodiment, the clutch center 40 includes the plurality of oil flow holes 49 located further ahead in the first circumferential direction S1 as advancing in the first direction D1. In this configuration, clutch oil moving along the center-side slipper cam surface 60S can be efficiently discharged to the outside of the clutch center 40.

In the clutch device 10 according to this embodiment, the oil flow holes 49 are formed in the spline grooves 48A closest to the end 60SD of the center-side slipper cam surface 60S in the first circumferential direction S1 in the first circumferential direction S1. In this configuration, since clutch oil is most easily accumulated near the end 60SD of the center-side slipper cam surface 60S in the first circumferential direction S1, the first oil flow hole 49A formed in the spline grooves 48A near this portion enables clutch oil in the clutch center 40 to be more efficiently discharged to the outside of the clutch center 40.

The foregoing description is directed to the first embodiment of the present disclosure. The first embodiment described above, however, is merely an example, and the present disclosure can be performed in various modes and through various embodiments.

### <SECOND EMBODIMENT NOT ENCOMPASSED BY THE PRESENT INVENTION>

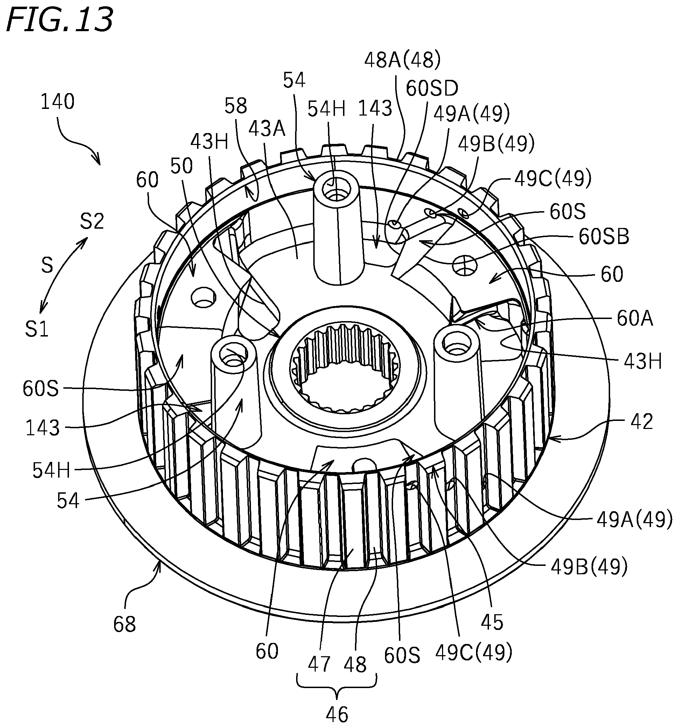

In the first embodiment described above, the clutch center 40 includes the through hole 43P penetrating the base wall 43 in the directions D. However, the present disclosure is not limited to this embodiment. FIG. 13 is a perspective view of a clutch center 140 according to a second embodiment. As illustrated in FIG. 13, the clutch center 140 includes a recess 143 on a surface 43A of a base wall 43. The recess 143 is recessed from the surface 43A in the first direction D1. The recess 143 is located ahead, in a first direction D1, of an end 60SD of a center-side slipper cam surface 60S in a first circumferential direction S1. The recess 143 is formed between a center-side cam portion 60 and a center-side cam hole 43H. The recess 143 is located ahead, in the first circumferential direction S1, of the end 60SD of the center-side slipper cam surface 60S in the first circumferential direction S1. The recess 143 is located ahead of a boss 54 in a second circumferential direction S2. The recess 143 is located radially outward of the boss 54. The recess 143 is adjacent to the center-side slipper cam surface 60S. The recess 143 is smaller than the center-side cam hole 43H. The recess 143 has the function of holding clutch oil. A first oil flow hole 49A is located radially outward of the recess 143.

In a clutch device 10 according to this embodiment, the clutch center 140 includes a recess 143 located ahead, in the first circumferential direction S1, of the end 60SD of the center-side slipper cam surface 60S in the first circumferential direction S1 and recessed in the first direction D1. In this configuration, since clutch oil is most easily accumulated near the end 60SD of the center-side slipper cam surface 60S in the first circumferential direction S1, the recess 143 disposed near this portion enables a larger amount of clutch oil to be held. Accordingly, clutch oil held in the recess 143 can be efficiently discharged to the outside of the clutch center 40.

In the clutch device 10 according to this embodiment, the first oil flow hole 49A is located radially outward of the recess 143. In this configuration, clutch oil held in the recess 143 can be more efficiently discharged to the outside of the clutch center 40 through the first oil flow hole 49A.

In the first and second embodiments described above, the oil flow holes 49 include the first oil flow hole 49A, the second oil flow hole 49B, and the third oil flow hole 49C, but may include other oil flow holes different from the first through third oil flow holes 49A through 49C. The oil flow holes 49 may include at least one of the first through third oil flow holes 49A through 49C. Alternatively, the oil flow holes 49 may include at least one of the first through third oil flow holes 49A through 49C and other oil flow holes different from the first through third oil flow holes 49A through 49C. The number of the other oil flow holes may be one or two or more.

### <Third Embodiment Not Encompassed by the Present Invention>

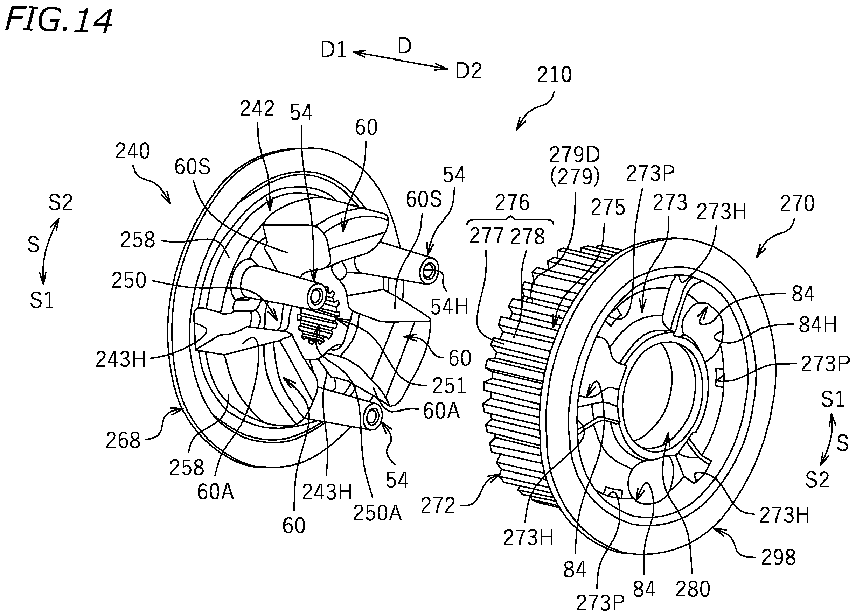

FIG. 14 is a disassembled perspective view of a clutch center 240 and a pressure plate 270 of a clutch device 210 according to a third embodiment.

The clutch center 240 is housed in a clutch housing 30 (see FIG. 1). The clutch center 240 and the clutch housing 30 are concentrically disposed. As illustrated in FIG. 14, the clutch center 240 includes a body 242, and a flange 268 connected to an outer edge of the body 242 on the side of a first direction D1 and extending radially outward. The body 242 projects from the flange 268 in a second direction D2. The clutch center 240 does not hold output-side rotating plates 22. The clutch center 240 is rotationally driven together with an output shaft 15 (see FIG. 1).

As illustrated in FIG. 14, the body 242 includes an output shaft holding portion 250, a plurality of center-side cam portions 60, and a center-side fitting portion 258. The center-side cam portions 60 project from the flange 268 in the second direction D2. The center-side cam portions 60 are located radially outward of the output shaft holding portion 250.

The output shaft holding portion 250 has a cylindrical shape. The output shaft holding portion 250 has an insertion hole 251 in which the output shaft 15 (see FIG. 1) is inserted and spline-fitted. The insertion hole 251 penetrates the body 242. An inner peripheral surface 250A of the output shaft holding portion 250 defining the insertion hole 251 includes a plurality of spline grooves formed along the axial direction. The output shaft 15 is coupled to the output shaft holding portion 250.

As illustrated in FIG. 14, the clutch center 240 includes a plurality of (three in this embodiment) bosses 54. The bosses 54 are located radially outward of the output shaft holding portion 250. The bosses 54 are disposed on the body 242.

As illustrated in FIG. 14, the clutch center 240 includes center-side cam holes 243H penetrating the body 242 and a portion of the flange 268. The center-side cam holes 243H penetrate the body 242 and the flange 268 in directions D. The center-side cam holes 243H extend from portions on the sides of the output shaft holding portion 250 to the flange 268. The center-side cam holes 243H are formed between center-side assist cam surfaces 60A of the center-side cam portions 60 and the bosses 54. When seen in the axial directions of the clutch center 240, the center-side assist cam surfaces 60A overlap with a portion of the center-side cam holes 243H.

As illustrated in FIG. 14, the center-side fitting portion 258 is disposed on the body 242. The center-side fitting portion 258 is located radially outward of the center-side cam portions 60. The center-side fitting portion 258 is located ahead of the center-side cam portions 60 in the first direction D1. The center-side fitting portion 258 is configured to slidably fit in a pressure-side fitting portion 288 (see FIG. 12).

The pressure plate 270 is movable toward or away from the clutch center 240 and rotatable relative to the clutch center 240. The pressure plate 270 is configured to press input-side rotating plates 20 and the output-side rotating plates 22. The pressure plate 270, the clutch center 240, and the clutch housing 30 are concentrically disposed. The pressure plate 270 includes a cylindrical body 272 and a flange 298 extending radially outward from the outer edge of the body 272. The pressure plate 270 holds the plurality of output-side rotating plates 22 alternately arranged with the input-side rotating plates 20 in the directions D.

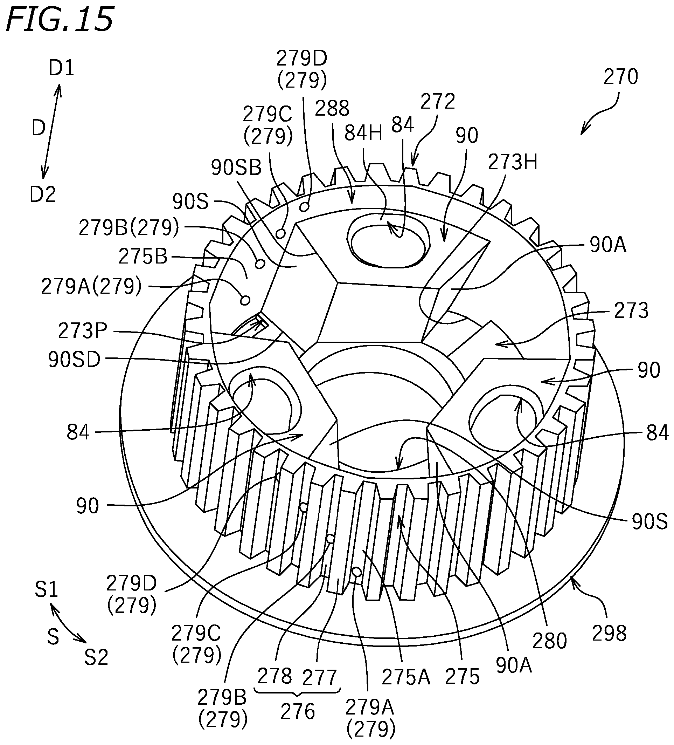

As illustrated in FIG. 15, the body 272 includes a ring-shaped base wall 273, an outer peripheral wall 275 located radially outward of the base wall 273 and extending in the first direction D1, a cylindrical portion 280 disposed at the center of the base wall 273, a plurality of pressure-side cam portions 90 connected to the base wall 273 and the outer peripheral wall 275, a pressure-side fitting portion 288, and spring housing portions 84 (see FIG. 11). The pressure-side cam portions 90 project from the body 272 in the first direction D1. The pressure-side cam portions 90 are located radially outward of the cylindrical portion 280. The pressure-side cam portions 90 are located radially inward of the outer peripheral wall 275.

The cylindrical portion 280 has a cylindrical shape. The cylindrical portion 280 is integrally formed with the pressure-side cam portions 90. The cylindrical portion 280 houses a distal end 15T of the output shaft 15 (see FIG. 1). The cylindrical portion 280 houses a release bearing 18 (see FIG. 1). The cylindrical portion 280 receives a pressing force from a push member 16B. The cylindrical portion 280 receives clutch oil that has flowed out from the distal end 15T of the output shaft 15.

As illustrated in FIG. 15, the outer peripheral wall 275 of the pressure plate 270 is located radially outward of the cylindrical portion 280. The outer peripheral wall 275 has a ring shape extending in the directions D. An outer peripheral surface 275A of the outer peripheral wall 275 has a spline fitting portion 276. The spline fitting portion 276 includes a plurality of pressure-side fitting teeth 277 extending in the axial directions of the pressure plate 270 along the outer peripheral surface 275A of the outer peripheral wall 275, a plurality of spline grooves 278 each formed between adjacent ones of the pressure-side fitting teeth 277 and extending in the axial directions of the pressure plate 270, and oil flow holes 279. The pressure-side fitting teeth 277 hold the output-side rotating plates 22. The plurality of pressure-side fitting teeth 277 are arranged in circumferential directions S. The plurality of pressure-side fitting teeth 277 are arranged at regular intervals in the circumferential directions S. The plurality of pressure-side fitting teeth 277 have the same shape. The pressure-side fitting teeth 277 project radially outward from the outer peripheral surface 275A of the outer peripheral wall 275.

As illustrated in FIG. 15, the oil flow holes 279 penetrate the outer peripheral wall 275 along the radial directions. Each of the oil flow holes 279 is formed between adjacent ones of the pressure-side fitting teeth 277. That is, the oil flow holes 279 are formed in the spline grooves 278. The oil flow holes 279 are formed at the sides of the pressure-side cam portions 90. More specifically, the oil flow holes 279 are formed at the sides of pressure-side slipper cam surfaces 90S of the pressure-side cam portions 90. The oil flow holes 279 cause the inside and outside of the pressure plate 270 to communicate with each other. The oil flow holes 279 allow clutch oil that has flowed from the output shaft 15 into the pressure plate 270 to be discharged to the outside of the pressure plate 270. The oil flow holes 279 allow clutch oil flowing at the inner peripheral side of the outer peripheral wall 275 to be discharged to the outside of the pressure plate 270. Although the oil flow holes 279 of this embodiment have circular shapes, the shapes of the oil flow holes 279 are not particularly limited.

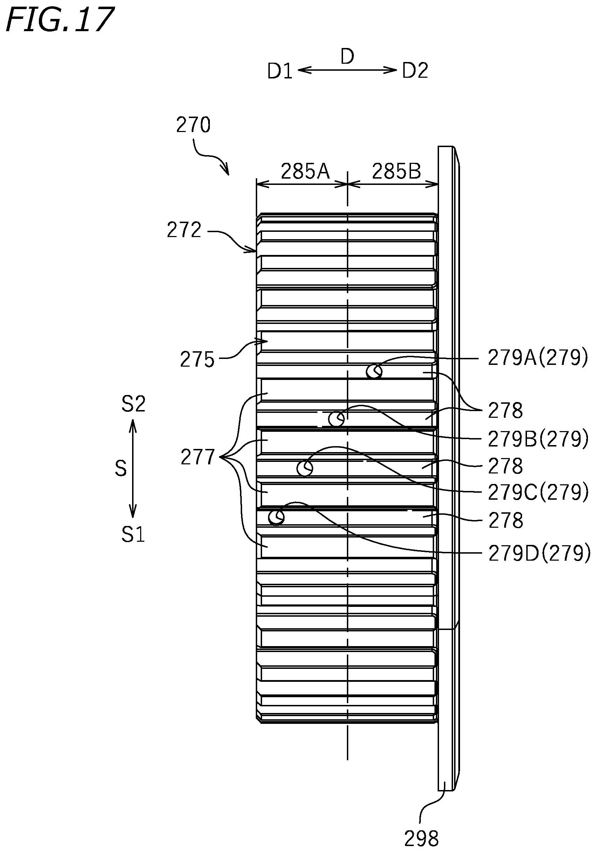

As illustrated in FIG. 17, the oil flow holes 279 of this embodiment include a first oil flow hole 279A located at the most advanced side in the second direction D2, a second oil flow hole 279B located ahead of the first oil flow hole 279A in the first direction D1, a third oil flow hole 279C located ahead of the second oil flow hole 279B in the first direction D1, and a fourth oil flow hole 279D located ahead of the third oil flow hole 279C in the first direction D1. The first oil flow hole 279A, the second oil flow hole 279B, the third oil flow hole 279C, and the fourth oil flow hole 279D have the same (i.e., the same opening area), but may have different shapes. Although the oil flow holes 279 include the first oil flow hole 279A, the second oil flow hole 279B, the third oil flow hole 279C, and the fourth oil flow hole 279D, the number of the oil flow holes is not limited to four. The first oil flow hole 279A, the second oil flow hole 279B, the third oil flow hole 279C, and the fourth oil flow hole 279D are formed in different spline grooves 278. As illustrated in FIG. 15, the first oil flow hole 279A, the second oil flow hole 279B, the third oil flow hole 279C, and the fourth oil flow hole 279D are formed along the pressure-side slipper cam surfaces 90S.

As illustrated in FIG. 15, in the circumferential directions S, the first oil flow hole 279A, the second oil flow hole 279B, and the third oil flow hole 279C are formed between ends 90SB of the pressure-side slipper cam surfaces 90S in a first circumferential direction S1 and pressure-side cam holes 273H described later and located ahead, in a second circumferential direction S2, of the ends 90SB in the first circumferential direction S1. In the circumferential directions S, the first oil flow hole 279A is formed between an end 90SD of the pressure-side slipper cam surface 90S in the second circumferential direction S2 and the pressure-side cam hole 273H ahead, in the second circumferential direction S2, of the end 90SD in the second circumferential direction S2. The first oil flow hole 279A is located radially outward of a through hole 273P described later. The second oil flow hole 279B and the third oil flow hole 279C are located radially outward of the pressure-side slipper cam surfaces 90S. The second oil flow hole 279B and the third oil flow hole 279C are located ahead, in the first circumferential direction S1, of the ends 90SD of the pressure-side slipper cam surfaces 90S in the second circumferential direction S2. The second oil flow hole 279B and the third oil flow hole 279C are located ahead, in the first direction D1, of the ends 90SD of the pressure-side slipper cam surfaces 90S in the second circumferential direction S2. The second oil flow hole 279B and the third oil flow hole 279C are located ahead, in the second circumferential direction S2, of the ends 90SB of the pressure-side slipper cam surfaces 90S in the first circumferential direction S1. The second oil flow hole 279B and the third oil flow hole 279C are located ahead, in the second direction D2, of the ends 90SB of the pressure-side slipper cam surfaces 90S in the first circumferential direction S1. The second oil flow hole 279B is formed in the spline groove 278A closest, in the second circumferential direction S2, to the end 90SD of the pressure-side slipper cam surface 90S in the second circumferential direction S2. The fourth oil flow hole 279D is formed in the pressure-side fitting portion 288. The fourth oil flow hole 279D is located ahead, in the first direction D1, of the end 90SB of the pressure-side slipper cam surface 90S in the first circumferential direction S1. The fourth oil flow hole 279D is located between the pressure-side slipper cam surface 90S and a pressure-side assist cam surface 90A in the circumferential directions S. In the circumferential directions S, the fourth oil flow hole 279D is formed between the end 90SD of the pressure-side slipper cam surface 90S in the second circumferential direction S2 and an insertion hole 84H located ahead, in the first circumferential direction S1, of the end 90SD in the second circumferential direction S2. In the circumferential directions S, the fourth oil flow hole 279D is located between the end 90SB of the pressure-side slipper cam surface 90S in the first circumferential direction S1 and the insertion hole 84H located ahead, in the first circumferential direction S1, of the end 90SB in the first circumferential direction S1.

As illustrated in FIG. 17, when the outer peripheral wall 275 is evenly divided, with respect to the axial directions (i.e., directions D) of the output shaft 15, into two portions of a first portion 285A located on the side of the first direction D1 and a second portion 285B located on the side of the second direction D2, the total opening area of the oil flow holes 279 (the second oil flow hole 279B, the third oil flow hole 279C, and the fourth oil flow hole 279D in this embodiment) located in the first portion 285A is larger than the toral opening area of the oil flow holes 279 (the first oil flow hole 279A in this embodiment) located in the second portion 285B. In this embodiment, the plurality of oil flow holes 279 have the same shape, the number of the oil flow holes 279 located in the first portion 285A is three, and the number of the oil flow holes 279 located in the second portion 285B is one. That is, the number of the oil flow holes 279 located in the first portion 285A is larger than the number of the oil flow holes 279 located in the second portion 285B. Even in a case where the number of the oil flow holes 279 located in the first portion 285A is smaller than the number of the oil flow holes 279 located in the second portion 276B, since the oil flow holes 279 located in the first portion 285A have the different shape from that of the oil flow holes 279 located in the second portion 285B, the total opening area of the oil flow holes 279 located in the first portion 285A can be larger than the total opening area of the oil flow holes 279 located in the second portion 285B.

The output-side rotating plates 22 are held by the spline fitting portion 276 of the pressure plate 270. The output-side rotating plates 22 are held by the pressure-side fitting teeth 277 and the spline grooves 278 by spline-fitting. The output-side rotating plates 22 are displaceable along the axial directions of the pressure plate 270. The output-side rotating plates 22 are rotatable together with the pressure plate 270.

As illustrated in FIG. 15, the pressure-side fitting portion 288 is located radially outward of the cylindrical portion 280. The pressure-side fitting portion 288 is located radially outward of the pressure-side cam portions 90. The pressure-side fitting portion 288 are located ahead of the pressure-side cam portions 90 in the first direction D1. The pressure-side fitting portion 288 is formed on an inner peripheral surface 275B of the outer peripheral wall 275. The pressure-side fitting portion 288 is slidably fitted onto a center-side fitting portion 258 (see FIG. 14). A gap is formed between the pressure-side fitting portion 288 and the center-side fitting portion 258.

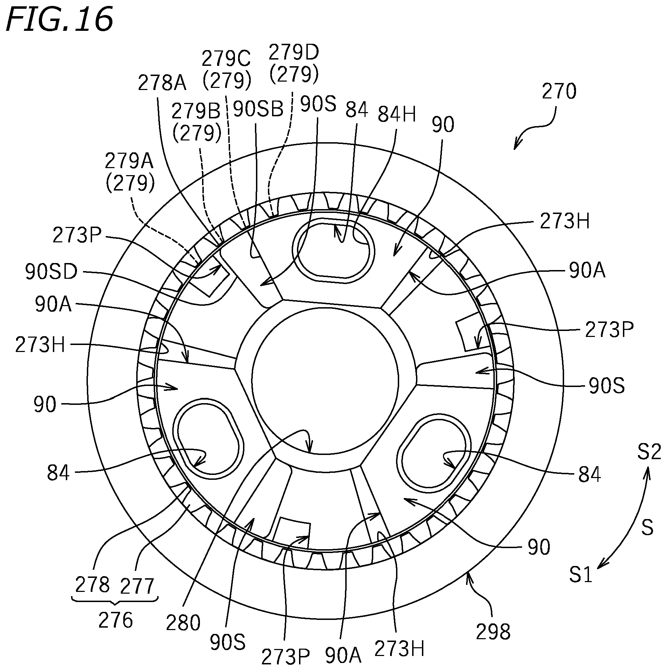

As illustrated in FIGS. 15 and 16, the pressure plate 270 includes the pressure-side cam holes 273H penetrating a portion of the base wall 273. The pressure-side cam holes 273H are an example of a first through hole. The pressure-side cam holes 273H penetrate the base wall 273 along the directions D. The pressure-side cam holes 273H are located radially outward of the cylindrical portion 80. The pressure-side cam holes 273H extend from sides on the cylindrical portion 80 to the outer peripheral wall 275. Each of the pressure-side cam holes 273H penetrates a portion between adjacent ones of the pressure-side cam portions 90. Each of the pressure-side cam holes 273H penetrates a portion between the pressure-side assist cam surface 90A of one of the pressure-side cam portions 90 and the pressure-side slipper cam surface 90S of its adjacent one of the pressure-side cam portions 90. When seen in the axial directions of the pressure plate 270, the pressure-side assist cam surfaces 90A overlap with a portion of the pressure-side cam holes 273H. Clutch oil flows into the pressure-side cam holes 273H from the outside of the pressure plate 270.

As illustrated in FIGS. 15 and 16, the pressure plate 270 includes the through hole 273P penetrating a portion of the base wall 273. The through hole 273P penetrates the base wall 273 along the directions D. The through hole 273P is formed between the pressure-side cam portions 90 and the pressure-side cam holes 273H. The through hole 273P is located ahead, in the second circumferential direction S2, of the end 90SD of the pressure-side slipper cam surface 90S in the second circumferential direction S2. The through hole 273P is adjacent to the pressure-side slipper cam surface 90S. The through hole 273P is smaller than the pressure-side cam holes 273H. The through hole 273P causes the inside and outside of the pressure plate 270 to communicate with each other. The through hole 273P guides clutch oil flowing outside the pressure plate 270 into the pressure plate 270. The through hole 273P is an example of a second through hole.

As described above, in the clutch device 210 of this embodiment, in the circumferential directions S, each of the oil flow holes 279 is located between the end 90SB of the pressure-side slipper cam surface 90S in the first circumferential direction S1 and the pressure-side cam hole 273H located ahead, in the second circumferential direction S2, of the end 90SB in the first circumferential direction S1. Accordingly, clutch oil in the pressure plate 270 can be efficiently discharged to the outside of the pressure plate 270 through the oil flow holes 279 and supplied to the input-side rotating plates 20 and the output-side rotating plates 22.

In the clutch device 210 of this embodiment, in the circumferential directions S, the first oil flow hole 279A is formed between the end 90SD of the pressure-side slipper cam surface 90S in the second circumferential direction S2 and the pressure-side cam hole 273H located ahead, in the second circumferential direction S2, of the end 90SD in the second circumferential direction S2. In this configuration, clutch oil in the pressure plate 270 is more efficiently discharged to the outside of the pressure plate 270 through the oil flow hole 279A.

In the clutch device 210 of this embodiment, the pressure plate 270 includes the through hole 273P located ahead, in the second circumferential direction S2, of the end 90SD of the pressure-side slipper cam surface 90S in the second circumferential direction S2, and the through hole 273P can guide clutch oil flowing outside the pressure plate 270 into the pressure plate 270. In this configuration, a large amount of clutch oil flows near the end 90SD of the pressure-side slipper cam surface 90S in the second circumferential direction S2, and thus, the first oil flow hole 279A formed in this portion enables clutch oil in the pressure plate 270 to be more efficiently discharged to the outside of the pressure plate 270.

In the clutch device 210 of this embodiment, the pressure plate 270 includes the plurality of oil flow holes 279, and when the outer peripheral wall 275 is evenly divided, with respect to the axial directions (i.e., directions D) of the output shaft 15, into two portions of the first portion 285A located on the side of the first direction D1 and the second portion 285B located on the side of the second direction D2, the total opening area of the oil flow holes 279 located in the first portion 285A is larger than the total opening area of the oil flow holes 279 located in the second portion 285B. In this configuration, clutch oil in the pressure plate 270 can be more efficiently discharged to the clutch center 240.

In the clutch device 210 of this embodiment, in a case where the plurality of oil flow holes 279 have the same shape, the number of the oil flow holes 279 located in the first portion 285A is larger than the number of the oil flow holes 279 located in the second portion 285B. In this configuration, clutch oil in the pressure plate 270 can be more efficiently discharged toward the clutch center 240.

In the clutch device 210 of this embodiment, the pressure plate 270 includes the plurality of oil flow holes 279, and the plurality of oil flow holes 279 are formed along the pressure-side slipper cam surfaces 90S. In this configuration, clutch oil moving along the pressure-side slipper cam surfaces 90S can be efficiently discharged to the outside of the pressure plate 270.

In the clutch device 210 of this embodiment, the pressure plate 270 includes the plurality of oil flow holes 279, and the plurality of oil flow holes 279 are located further ahead in the second circumferential direction S2 as advancing in the second direction D2. In this configuration, clutch oil moving along the pressure-side slipper cam surfaces 90S can be efficiently discharged to the outside of the pressure plate 270.

In the clutch device 210 of this embodiment, the oil flow holes 279 are formed in the spline groove 278A closest, in the second circumferential direction S2, to the end 90SD of the pressure-side slipper cam surface 90S in the second circumferential direction S2. In this configuration, since clutch oil is easily accumulated near the end 90SD of the pressure-side slipper cam surface 90S in the second circumferential direction S2, the second oil flow hole 279B formed in the spline groove 278A near this portion enables clutch oil in the pressure plate 270 to be more efficiently discharged to the outside of the pressure plate 270.

### <Fourth Embodiment Not Encompassed by the Present Invention>

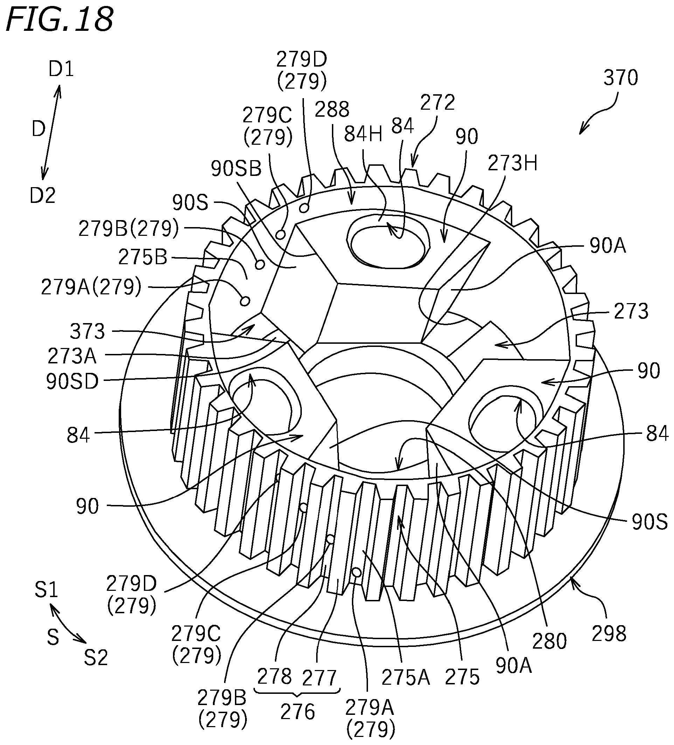

In the third embodiment described above, the pressure plate 270 includes the through hole 273P penetrating the base wall 273 along the directions D. However, the present disclosure is not limited to this example. FIG. 18 is a perspective view of a pressure plate 370 according to a fourth embodiment. As illustrated in FIG. 18, the pressure plate 370 includes a recess 373 on a surface 273A of a base wall 273, instead of the through hole 273P. The recess 373 is recessed from the surface 273A in a second direction D2. The recess 373 is located ahead, in the second direction D2, of an end 90SD of a pressure-side slipper cam surface 90S in a second circumferential direction S2. The recess 373 is formed between a pressure-side cam portion 90 and a pressure-side cam hole 273H. The recess 373 is located ahead, in the second circumferential direction S2, of the end 90SD of the pressure-side slipper cam surface 90S in the second circumferential direction S2. The recess 373 is adjacent to the pressure-side slipper cam surface 90S. The recess 373 is smaller than the pressure-side cam hole 273H. The recess 373 has the function of holding clutch oil. A first oil flow hole 279A is located radially outward of the recess 373.

In the clutch device 210 of this embodiment, the pressure plate 270 includes the recess 373 located ahead, in the second circumferential direction S2, of the end 90SD of the pressure-side slipper cam surface 90S in the second circumferential direction S2 and recessed in the second direction D2. In this configuration, since clutch oil is easily accumulated near the end 90SD of the pressure-side slipper cam surface 90S in the second circumferential direction S2, the recess 373 located near this portion can hold a larger amount of clutch oil. Then, clutch oil held in the recess 373 can be efficiently discharged to the outside of the pressure plate 270.

In the clutch device 210 of this embodiment, the first oil flow hole 279A is located radially outward of the recess 373. In this configuration, clutch oil held in the recess 373 can be more efficiently discharged to the outside of the pressure plate 270 through the first oil flow hole 379A.

### <Fifth Embodiment Encompassed by the Present Invention>

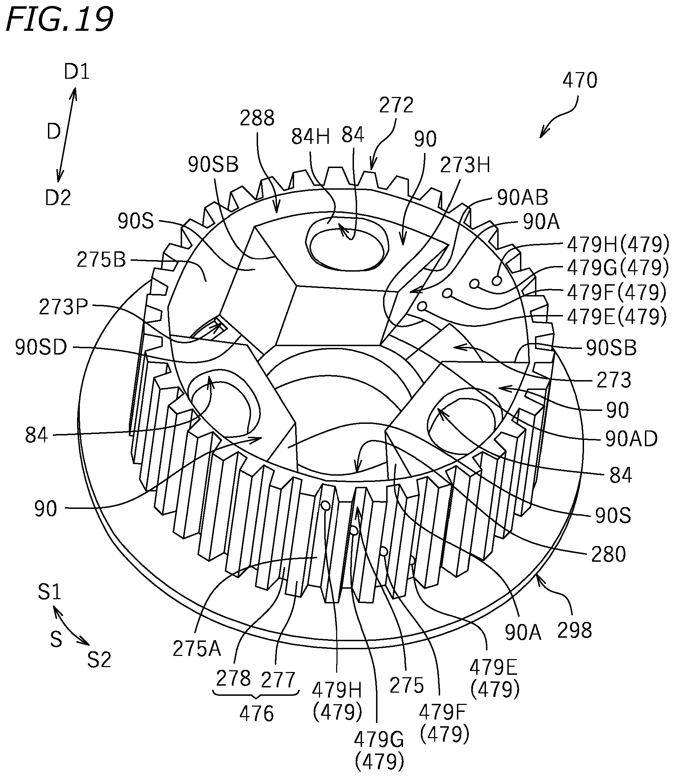

As illustrated in FIG. 19, a pressure plate 470 of a clutch device 210 according to a fifth embodiment includes a spline fitting portion 476. The spline fitting portion 476 includes a plurality of pressure-side fitting teeth 277, a plurality of spline grooves 278, and oil flow holes 479.

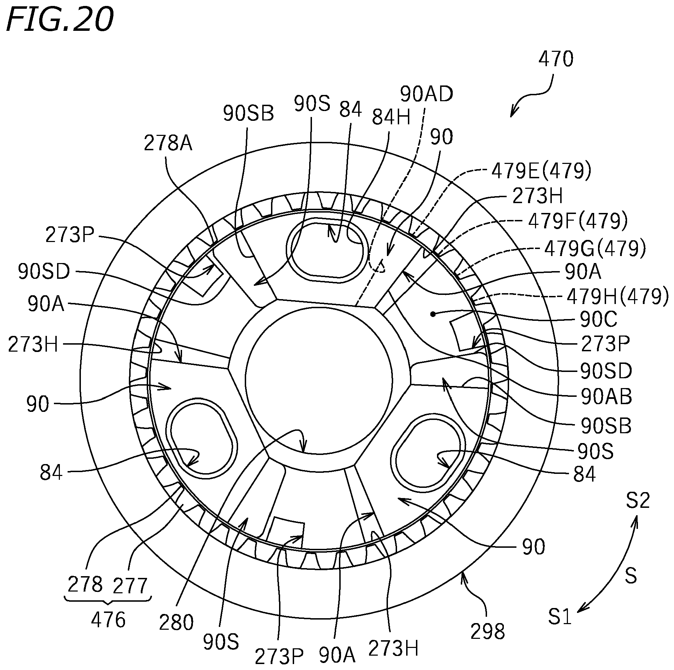

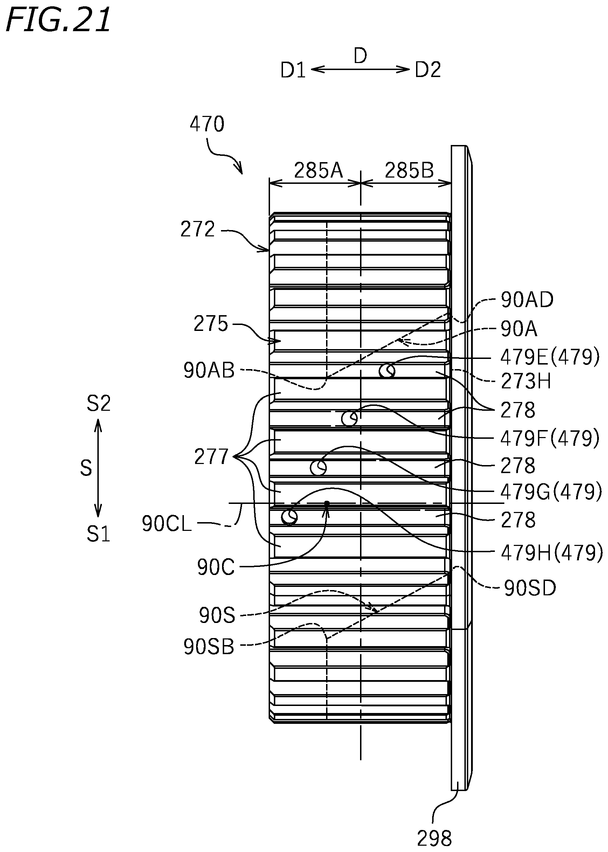

As illustrated in FIG. 19, the oil flow holes 479 penetrate an outer peripheral wall 275 along the radial directions. Each of the oil flow holes 479 is formed between adjacent ones of the pressure-side fitting teeth 277. That is, the oil flow holes 479 are formed in the spline groove 278. As illustrated in FIG. 20, in circumferential directions S, each of the oil flow holes 479 is located ahead, in a second circumferential direction S2, of an intermediate point 90C in the circumferential directions S between an end 90AB of a pressure-side assist cam surface 90A in a first circumferential direction S1 and an end 90SB of a pressure-side slipper cam surface 90S in the first circumferential direction S1 located ahead, in the first circumferential direction S1, of the end 90AB in the first circumferential direction S1. A center line 90CL in FIG. 21 is a straight line parallel to directions D and passing through the intermediate point 90C. As illustrated in FIG. 21, when seen in the radial directions of the pressure plate 470, at least one of the oil flow holes 479 is located ahead, in the second circumferential direction S2, of the end 90AB of the pressure-side assist cam surface 90A in the first circumferential direction S1. When seen in the radial directions of the pressure plate 470, the oil flow holes 479 are located ahead, in the first circumferential direction S1, of the end 90AD of the pressure-side assist cam surface 90A in the second circumferential direction S2. The oil flow holes 479 cause the inside and outside of the pressure plate 470 to communicate with each other. The oil flow holes 479 allow clutch oil that has flowed from an output shaft 15 into the pressure plate 470 to be discharged to the outside of the pressure plate 470. The oil flow holes 479 allow clutch oil flowing at the inner peripheral side of the outer peripheral wall 275 to be discharged to the outside of the pressure plate 470. Although the oil flow holes 479 of this embodiment have circular shapes, the shapes of the oil flow holes 49 are not particularly limited.

As illustrated in FIG. 21, the oil flow holes 479 of this embodiment include a fifth oil flow hole 479E located at the most advanced side in the second direction D2, a sixth oil flow hole 479F located ahead of the fifth oil flow hole 479E in the first direction D1, a seventh oil flow hole 479G located ahead of the sixth oil flow hole 479F in the first direction D1, and an eighth oil flow hole 479H located ahead of the seventh oil flow hole 479G in the seventh direction D1. The fifth oil flow hole 479E, the sixth oil flow hole 479F, the seventh oil flow hole 479G, and the eighth oil flow hole 479H have the same (i.e., the same opening area), but may have different shapes. Although the oil flow holes 479 include the fifth oil flow hole 479E, the sixth oil flow hole 479F, the seventh oil flow hole 479G, and the eighth oil flow hole 479H, the number of the oil flow holes is not limited to four. The fifth oil flow hole 479E, the sixth oil flow hole 479F, the seventh oil flow hole 479G, and the eighth oil flow hole 479H are formed in different spline grooves 278. As illustrated in FIG. 19, the fifth oil flow hole 479E, the sixth oil flow hole 479F, the seventh oil flow hole 479G, and the eighth oil flow hole 479H are formed along the pressure-side assist cam surface 90A.

As illustrated in FIG. 20, in the circumferential directions S, the fifth oil flow hole 479E, the sixth oil flow hole 479F, and the seventh oil flow hole 479G are located between the end 90AD of the pressure-side assist cam surface 90A in the second circumferential direction S2 and the intermediate point 90C. The fifth oil flow hole 479E is located radially outward of the pressure-side assist cam surface 90A. In the circumferential directions S, the fifth oil flow hole 479E is formed between the end 90AB of the pressure-side assist cam surface 90A in the first circumferential direction S1 and the end 90AD in the second circumferential direction S2. The fifth oil flow hole 479E and the sixth oil flow hole 479F are formed radially outward of the pressure-side cam holes 273H. In the circumferential directions S, the seventh oil flow hole 479G is formed between the pressure-side cam holes 273H and the intermediate point 90C. The eighth oil flow hole 479 is formed in the pressure-side fitting portion 288. In the circumferential directions S, the eighth oil flow hole 479H is formed between the intermediate point 90C and the end 90SD of the pressure-side slipper cam surface 90S in the second circumferential direction S2.

As illustrated in FIG. 21, the total opening area of the oil flow holes 479 (the sixth oil flow hole 479F, the seventh oil flow hole 479G, and the eighth oil flow hole 479H in this embodiment) located in the first portion 285A is larger than the total opening area of the oil flow holes 479 (the fifth oil flow hole 479E in this embodiment) located in the second portion 285B. In this embodiment, the plurality of oil flow holes 479 have the same shape, the number of the oil flow holes 479 located in the first portion 285A is three, and the number of the oil flow holes 479 located in the second portion 285B is one. That is, the number of the oil flow holes 479 located in the first portion 285A is larger than the number of the oil flow holes 479 located in the second portion 285B. Even in a case where the number of the oil flow holes 479 located in the first portion 285A is smaller than the number of the oil flow holes 479 located in the second portion 276B, since the oil flow holes 479 located in the first portion 285A have the different shape from that of the oil flow holes 479 located in the second portion 285B, the total opening area of the oil flow holes 479 located in the first portion 285A can be larger than the total opening area of the oil flow holes 479 located in the second portion 285B.

In the clutch device 210 of this embodiment, in circumferential directions S, each of the oil flow holes 479 is located ahead, in the second circumferential direction S2, of the intermediate point 90C in the circumferential directions S between the end 90AB of the pressure-side assist cam surface 90A in the first circumferential direction S1 and the end 90SB of the pressure-side slipper cam surface 90S in the first circumferential direction S1 located ahead, in the first circumferential direction S1, of the end 90AB in the first circumferential direction S1. Accordingly, clutch oil in the pressure plate 470 can be efficiently discharged to the outside of the pressure plate 470 through the oil flow holes 479 and supplied to input-side rotating plates 20 and output-side rotating plates 22.

In the clutch device 210 of this embodiment, when seen in the radial directions of the pressure plate 470, at least one of the oil flow holes 479 is located ahead, in the second circumferential direction S2, of the end 90AB of the pressure-side assist cam surface 90A in the first circumferential direction S1. In this configuration, clutch oil that has flowed to the pressure-side assist cam surface 90A through the oil flow holes 479 can be efficiently discharged to the outside of the pressure plate 470.

In the third and fourth embodiments described above, the oil flow holes 279 include the first oil flow hole 279A, the second oil flow hole 279B, the third oil flow hole 279C, and the fourth oil flow hole 279D, but may include other oil flow holes different from the first through fourth oil flow holes 279A through 279D. The oil flow holes 279 may include at least one of the first through fourth oil flow holes 279A through 279D. The oil flow holes 279 may also include at least one of the first through fourth oil flow holes 279A through 279D and other oil flow holes different from the first through fourth oil flow holes 279A through 279D. The number of the other oil flow holes may be one or two or more. The third and fourth embodiments may include the oil flow holes 479 of the fifth embodiment.

In the fifth embodiment, according to the invention, the oil flow holes 479 include the fifth oil flow hole 479E, the sixth oil flow hole 479F, the seventh oil flow hole 479G, and the eighth oil flow hole 479H, but may include other oil flow holes different from the fifth through eighth oil flow holes 479E through 479H. The oil flow holes 479 may include at least one of the fifth through eighth oil flow holes 479E through 479H. The oil flow holes 479 may also include at least one of the fifth through eighth oil flow holes 479E through 479H and other oil flow holes different from the fifth through eighth oil flow holes 479E through 479H. The number of the other oil flow holes may be one or two or more. The fifth embodiment may include the oil flow holes 279 of the third and fourth embodiments.

Although the clutch center 240 does not hold the output-side rotating plates 22 in the third, fourth, and fifth embodiments, the present disclosure is not limited to this example. The clutch center 240 may include center-side fitting teeth having a configuration similar to the pressure-side fitting teeth 77 of the first embodiment capable of holding the output-side rotating plates 22.

In the embodiments described above, the plurality of oil flow holes 49, the plurality of oil flow holes 279, and the plurality of oil flow holes 479 are used, but some of these oil flow holes may be disposed at locations not recited in independent claims. That is, all the oil flow holes 49, the oil flow holes 279, and the oil flow holes 479 do not need to be disposed at locations recited in the independent claims.

### DESCRIPTION OF REFERENCE CHARACTERS

15 output shaft
20 input-side rotating plate
22 output-side rotating plate
30 clutch housing
60 center-side cam portion
60A center-side assist cam surface
60S center-side slipper cam surface
84H insertion hole
90 pressure-side cam portion
90A pressure-side assist cam surface
90AB end in first circumferential direction
90C intermediate point
90S pressure-side slipper cam surface
90SB end in first circumferential direction
90SD end in second circumferential direction
210 clutch device
270 pressure plate
273H pressure-side cam hole (first through hole)
273P through hole (second through hole)
275 outer peripheral wall
277 pressure-side fitting tooth
278 spline groove
279 oil flow hole
373 recess
479 oil flow hole

## Claims

1. A clutch device (210) that allows or interrupts transfer of a rotation driving force of an input shaft to an output shaft (15), the clutch device (210) comprising:
a clutch center (240) housed in a clutch housing (30) holding a plurality of input-side rotating plates (20) to be rotationally driven together with the output shaft (15), the input-side rotating plates (20) being operable to be rotationally driven by rotational driving of the input shaft; and
a pressure plate (470) movable toward or away from the clutch center (240), rotatable relative to the clutch center (240), holding a plurality of output-side rotating plates (22), and operable to press the input-side rotating plates (20) and the output-side rotating plates (22), the input-side rotating plates (20) and the output-side rotating plates (22) being alternately arranged, wherein
the pressure plate (470) includes:
a plurality of pressure-side cam portions (90) each including a pressure-side assist cam surface (90A) and a pressure-side slipper cam surface (90S), the pressure-side assist cam surface (90A) being operable to generate a force in a direction of causing the pressure plate (470) to approach the clutch center (240) in order to increase a pressing force between the input-side rotating plates (20) and the output-side rotating plates (22) upon rotation relative to the clutch center (240), the pressure-side slipper cam surface (90S) being operable to cause the pressure plate (470) to move away from the clutch center (240) in order to reduce a pressing force between the input-side rotating plates (20) and the output-side rotating plates (22) upon rotation relative to the clutch center (240);
a first through hole (273H) located between adjacent ones of the pressure-side cam portions (90);
an outer peripheral wall (275) located radially outward of the pressure-side cam portions (90);
a plurality of pressure-side fitting teeth (277) holding the output-side rotating plates (22), projecting radially outward from an outer peripheral surface (275A) of the outer peripheral wall (275), and arranged in circumferential directions (S);
a plurality of spline grooves (278) each located between adjacent ones of the pressure-side fitting teeth (277); and
an oil flow hole (479E, 479F, 479G) located in the spline grooves (278) to penetrate the outer peripheral wall (275) to allow clutch oil flowing at an inner peripheral side of the outer peripheral wall (275) to be discharged to outside of the pressure plate (470), and
assuming a direction in which the pressure plate (470) approaches the clutch center (240) is a first direction (D1), a direction in which the pressure plate (470) moves away from the clutch center (240) is a second direction (D2), a circumferential direction from one pressure-side cam portion (90) to another pressure-side cam portion (90) is a first circumferential direction (S1), and a circumferential direction from the another pressure-side cam portion (90) to the one pressure-side cam portion (90) is a second circumferential direction (S2),
the pressure plate (470) is rotatable in the first circumferential direction (S1) that is a direction from the pressure-side slipper cam surface (90S) to the pressure-side assist cam surface (90A) of one of the pressure-side cam portions (90),
**characterized in that**
in the circumferential directions (S), the oil flow hole (479E, 479F, 479G) is located ahead, in the second circumferential direction (S2), of an intermediate point (90C) which is located in the circumferential directions (S) between an end (90AB) of the pressure-side assist cam surface (90A) in the first circumferential direction (S1) and an end (90SB) of the pressure-side slipper cam surfaces (90S) in the first circumferential direction (S1) which is located ahead, in the first circumferential direction (S1), of the end (90AB) of the pressure-side assist cam surface (90A) in the first circumferential direction (S1).

2. The clutch device (210) according to claim 1, wherein
the pressure plate (470) includes a plurality of the oil flow holes (489E, 479F, 479G), and
when seen in radial directions of the pressure plate (470), at least one of the oil flow holes (479E) is located ahead, in the second circumferential direction (S2), of the end (90AB) of the pressure-side assist cam surface (90A) in the first circumferential direction (S1).

3. The clutch device (210) according to claim 1 or 2, wherein
the pressure plate (470) includes a plurality of the oil flow holes (489E, 479F, 479G), and
when the outer peripheral wall (275) is evenly divided, with respect to axial directions (D) of the output shaft (15), into two portions of a first portion (285A) located on a side of the first direction (D1) and a second portion (285B) located on a side of the second direction (D2), a total opening area of the oil flow holes (479F, 479G) located in the first portion (285A) is larger than a total opening area of the oil flow holes (489E) located in the second portion (285B).

4. The clutch device (210) according to claim 3, wherein assuming the plurality of the oil flow holes (489E, 479F, 479G) have an identical shape, the number of the oil flow holes located in the first portion (285A) is larger than the number of the oil flow holes located in the second portion (285B).

5. The clutch device (210) according to claim 1, wherein
the pressure plate (470) includes a plurality of the oil flow holes (489E, 479F, 479G), and
the plurality of the oil flow holes (489E, 479F, 479G) are located farther ahead in the second circumferential direction (S2) as advancing in the second direction (D2).

6. A motorcycle comprising the clutch device (210) according to claim 1 or 2.

## Patentansprüche

1. Eine Kupplungsvorrichtung (210), die die Übertragung einer Drehantriebskraft von einer Eingangswelle auf eine Ausgangswelle (15) ermöglicht oder unterbricht, wobei die Kupplungsvorrichtung (210) aufweist:
einer Kupplungsmitte (240), die in einem Kupplungsgehäuse (30) untergebracht ist und eine Vielzahl eingangsseitiger Drehscheiben (20) hält, die zusammen mit der Ausgangswelle (15) drehangetrieben werden sollen, wobei die eingangsseitigen Drehscheiben (20) so betätigt werden können, dass sie durch Drehantrieb der Eingangswelle drehangetrieben werden; und
eine Druckplatte (470), die in Richtung auf die Kupplungsmitte (240) zu oder von dieser weg bewegbar ist, relativ zur Kupplungsmitte (240) drehbar ist, mehrere ausgangsseitige Drehscheiben (22) hält und so betätigt werden kann, dass sie die eingangsseitigen Drehscheiben (20) und die ausgangsseitigen Drehscheiben (22) zusammendrückt, wobei die eingangsseitigen Drehscheiben (20) und die ausgangsseitigen Drehscheiben (22) abwechselnd angeordnet sind, wobei
die Druckplatte (470) aufweist:
eine Vielzahl von druckseitigen Nockenabschnitten (90), die jeweils eine druckseitige Unterstützungsnockenfläche (90A) und eine druckseitige Gleitnockenfläche (90S) aufweisen, wobei die druckseitige Unterstützungsnockenfläche (90A) so betätigbar ist, dass sie eine Kraft in einer Richtung erzeugt, die bewirkt, dass sich die Druckplatte (470) der Kupplungsmitte (240) nähert, um eine Druckkraft zwischen den eingangsseitigen Drehscheiben (20) und den ausgangsseitigen Drehscheiben (22) bei einer Drehung relativ zur Kupplungsmitte (240) zu erhöhen, wobei die druckseitige Gleitnockenfläche (90S) so betätigt werden kann, dass sie die Druckplatte (470) von der Kupplungsmitte (240) wegbewegt, um eine Druckkraft zwischen den eingangsseitigen Drehscheiben (20) und den ausgangsseitigen Drehscheiben (22) bei einer Drehung relativ zur Kupplungsmitte (240) zu verringern;
ein erstes Durchgangsloch (273H), das zwischen benachbarten druckseitigen Nockenabschnitten (90) angeordnet ist;
eine Außenwand (275), die radial außerhalb der druckseitigen Nockenabschnitte (90) angeordnet ist;
eine Vielzahl von druckseitigen Passzähnen (277), die die ausgangsseitigen Drehscheiben (22) halten, radial nach außen von einer Außenumfangsfläche (275A) der Außenumfangswand (275) vorstehen und in Umfangsrichtung (S) angeordnet sind;
eine Vielzahl von Keilnuten (278), die jeweils zwischen benachbarten der druckseitigen Passzähne (277) angeordnet sind; und
eine Ölströmungsöffnung (479E, 479F, 479G), die in den Keilnuten (278) angeordnet ist, um die Außenwand (275) zu durchdringen, damit Kupplungsöl, das an einer Innenseite der Außenwand fließt (275) nach außerhalb der Druckplatte (470) fließen kann, und wobei
eine Richtung, in der sich die Druckplatte (470) der Kupplungsmitte (240) nähert, eine erste Richtung (D1) ist, eine Richtung, in der sich die Druckplatte (470) von der Kupplungsmitte (240) entfernt, eine zweite Richtung (D2), eine Umfangsrichtung von einem druckseitigen Nockenabschnitt (90) zu einem anderen druckseitigen Nockenabschnitt (90) eine erste Umfangsrichtung (S1) und eine Umfangsrichtung von dem anderen druckseitigen Nockenabschnitt (90) zu dem einen druckseitigen Nockenabschnitt (90) eine zweite Umfangsrichtung (S2) ist,
die Druckplatte (470) in der ersten Umfangsrichtung (S1) rotierend ist, die eine Richtung von der druckseitigen Gleitnockenfläche (90S) zur druckseitigen Unterstützungsnockenfläche (90A) eines der druckseitigen Nockenabschnitte (90) ist,
**dadurch gekennzeichnet, dass**
in den Umfangsrichtungen (S) die Ölströmungsöffnung (479E, 479F, 479G) in der zweiten Umfangsrichtung (S2) vor einem Zwischenpunkt (90C) angeordnet ist, der in den Umfangsrichtungen (S) zwischen einem Ende (90AB) der druckseitigen Unterstützungsnockenfläche (90A) in der ersten Umfangsrichtung (S1) und einem Ende (90SB) der druckseitigen Gleitnockenflächen (90S) in der ersten Umfangsrichtung (S1) liegt, das in der ersten Umfangsrichtung (S1) vor dem Ende (90AB) der druckseitigen Unterstützungsnockenfläche (90A) in der ersten Umfangsrichtung (S1) liegt.

2. Die Kupplungsvorrichtung (210) gemäß Anspruch 1, wobei
die Druckplatte (470) eine Vielzahl von Ölströmungsöffnungen (489E, 479F, 479G) aufweist, und in Radialrichtung der Druckplatte (470) gesehen, mindestens eines der Ölströmungsöffnungen (479E) in der zweiten Umfangsrichtung (S2) vor dem Ende (90AB) der druckseitigen Unterstützungsnockenfläche (90A) in der ersten Umfangsrichtung (S1) angeordnet ist.

3. Die Kupplungsvorrichtung (210) gemäß Anspruch 1 oder 2, wobei
die Druckplatte (470) eine Vielzahl der Ölströmungsöffnungen (489E, 479F, 479G) aufweist, und wenn die Außenwand (275) in Bezug auf die Axialrichtungen (D) der Abtriebswelle (15) gleichmäßig in zwei Abschnitte unterteilt ist, nämlich einen ersten Abschnitt (285A), der sich auf einer Seite der ersten Richtung (D1) befindet, und einen zweiten Abschnitt (285B), der sich auf einer Seite der zweiten Richtung (D2) befindet, wobei die Gesamtöffnung der Ölströmungsöffnungen (479F, 479G), die sich im ersten Abschnitt (285A) befinden, größer ist als die Gesamtöffnung der Ölströmungsöffnungen (489E), die sich im zweiten Abschnitt (285B) befinden.

4. Die Kupplungsvorrichtung (210) gemäß Anspruch 3, wobei unter der Annahme, dass die Vielzahl der Ölströmungsöffnungen (489E, 479F, 479G) eine identische Form haben, die Anzahl der im ersten Abschnitt (285A) angeordneten Ölströmungsöffnungen größer ist als die Anzahl der im zweiten Abschnitt (285B) angeordneten Ölströmungsöffnungen.

5. Die Kupplungsvorrichtung (210) gemäß Anspruch 1, wobei
die Druckplatte (470) eine Vielzahl von Ölströmungsöffnungen (489E, 479F, 479G) aufweist und die Vielzahl von Ölströmungsöffnungen (489E, 479F, 479G) in der zweiten Umfangsrichtung (S2) weiter vorne angeordnet ist, wenn man sich in der zweiten Richtung (D2) vorwärts bewegt.

6. Ein Motorrad aufweisend die Kupplungsvorrichtung (210) gemäß Anspruch 1 oder 2.

## Revendications

1. Dispositif d'embrayage (210) permettant ou interrompant le transfert d'une force d'entraînement en rotation d'un arbre d'entrée vers un arbre de sortie (15), le dispositif d'embrayage (210) comprenant :
un centre d'embrayage (240) logé dans un carter d'embrayage (30) contenant une pluralité de plateaux rotatifs côté entrée (20) devant être entraînés en rotation avec l'arbre de sortie (15), les plateaux rotatifs côté entrée (20) pouvant être actionnés pour être entraînés en rotation par l'entraînement en rotation de l'arbre d'entrée ; et
un plateau de pression (470) mobile vers ou loin du centre d'embrayage (240), rotatif par rapport au centre d'embrayage (240), maintenant une pluralité de plateaux rotatifs côté sortie (22), et peut être utilisé pour presser les plateaux rotatifs côté entrée (20) et les plateaux rotatifs côté sortie (22), les plateaux rotatifs côté entrée (20) et les plateaux rotatifs côté sortie (22) étant agencés en alternance, dans lequel
le plateau de pression (470) inclut :
une pluralité de parties de came côté pression (90) incluant chacune une surface de came d'assistance côté pression (90A) et une surface de came de glissement côté pression (90S), la surface de came d'assistance côté pression (90A) peut être utilisée pour générer une force dans une direction amenant le plateau de pression (470) à s'approcher du centre d'embrayage (240) pour augmenter une force de pression entre les plateaux rotatifs côté entrée (20) et les plateaux rotatifs côté sortie (22) lors de la rotation par rapport au centre d'embrayage (240), la surface de came de glissement côté pression (90S) peut être utilisée pour éloigner le plateau de pression (470) du centre d'embrayage (240) pour réduire la force de pression entre les plateaux rotatifs côté entrée (20) et les plateaux rotatifs côté sortie (22) lors de la rotation par rapport au centre d'embrayage (240) ;
un premier trou traversant (273H) situé entre les parties adjacentes de came côté pression (90) ;
une paroi périphérique extérieure (275) située radialement à l'extérieur des parties de came côté pression (90) ;
une pluralité de dents (277) d'ajustement côté pression retenant les plateaux rotatifs côté sortie (22), faisant saillie radialement vers l'extérieur à partir d'une surface périphérique extérieure (275A) de la paroi périphérique extérieure (275), et agencées dans des directions circonférentielles (S) ;
une pluralité de rainures cannelées (278) situées chacune entre les dents (277) adjacentes du raccord côté pression ; et
un trou d'écoulement d'huile (479E, 479F, 479G) situé dans les rainures cannelées (278) pour pénétrer dans la paroi périphérique extérieure (275) pour permettre à l'huile d'embrayage s'écoulant sur un côté périphérique intérieur de la paroi périphérique extérieure (275) d'être évacuée à l'extérieur du plateau de pression (470), et
en supposant qu'une direction dans laquelle le plateau de pression (470) s'approche du centre d'embrayage (240) est une première direction (D1), une direction dans laquelle le plateau de pression (470) s'éloigne du centre d'embrayage (240) est une deuxième direction (D2), une direction circonférentielle d'une partie de came côté pression (90) à une autre partie de came côté pression (90) est une première direction circonférentielle (S1), et une direction circonférentielle de l'autre partie de came côté pression (90) à la première partie de came côté pression (90) est une deuxième direction circonférentielle (S2),
le plateau de pression (470) est rotatif dans la première direction circonférentielle (S1) qui est une direction allant de la surface de came de glissement côté pression (90S) à la surface de came d'assistance côté pression (90A) de l'une des parties de came côté pression (90),
**caractérisé en ce que**
dans les directions circonférentielles (S), le trou d'écoulement d'huile (479E, 479F, 479G) est situé en avant, dans la deuxième direction circonférentielle (S2), d'un point intermédiaire (90C) qui est situé dans les directions circonférentielles (S) entre une extrémité (90AB) de la surface de came d'assistance côté pression (90A) dans la première direction circonférentielle (S1) et une extrémité (90SB) des surfaces de came de glissement côté pression (90S) dans la première direction circonférentielle (S1) qui est située en avant, dans la première direction circonférentielle (S1), de l'extrémité (90AB) de la surface de came d'assistance côté pression (90A) dans la première direction circonférentielle (S1).

2. Dispositif d'embrayage (210) selon la revendication 1, dans lequel
le plateau de pression (470) inclut une pluralité de trous d'écoulement d'huile (489E, 479F, 479G), et vu dans les directions radiales du plateau de pression (470), au moins un des trous d'écoulement d'huile (479E) est situé en avant, dans la deuxième direction circonférentielle (S2), de l'extrémité (90AB) de la surface de came d'assistance côté pression (90A) dans la première direction circonférentielle (S1).

3. Dispositif d'embrayage (210) selon la revendication 1 ou 2, dans lequel
le plateau de pression (470) inclut une pluralité de trous d'écoulement d'huile (489E, 479F, 479G), et
lorsque la paroi périphérique extérieure (275) est divisée uniformément, par rapport aux directions axiales (D) de l'arbre de sortie (15), en deux parties d'une première partie (285A) située sur un côté de la première direction (D1) et d'une deuxième partie (285B) située sur un côté de la deuxième direction (D2), une zone d'ouverture totale des trous d'écoulement d'huile (479F, 479G) situés dans la première partie (285A) est plus grande qu'une zone d'ouverture totale des trous d'écoulement d'huile (489E) situés dans la deuxième partie (285B).

4. Dispositif d'embrayage (210) selon la revendication 3, dans lequel, en supposant que la pluralité des trous d'écoulement d'huile (489E, 479F, 479G) ont une forme identique, le nombre des trous d'écoulement d'huile situés dans la première partie (285A) est supérieur au nombre des trous d'écoulement d'huile situés dans la deuxième partie (285B).

5. Dispositif d'embrayage (210) selon la revendication 1, dans lequel
le plateau de pression (470) inclut une pluralité de trous d'écoulement d'huile (489E, 479F, 479G), et la pluralité de trous d'écoulement d'huile (489E, 479F, 479G) sont situés plus en avant dans la deuxième direction circonférentielle (S2) en avançant dans la deuxième direction (D2).

6. Motocycle comprenant le dispositif d'embrayage (210) selon la revendication 1 ou 2.
